# EUROPEAN PATENT SPECIFICATION

(11) **EP 3 727 822 B1**
(45) Date of publication and mention of the grant of the patent: **15.12.2021**
(21) Application number: 18836884.9
(22) Date of filing: 17.12.2018
(51) Int. Cl.: B29D 30/06, B29D 30/00

(54) **PROCESS AND PLANT FOR BUILDING AN ADDITIONAL COMPONENT WITHIN A VULCANISED TYRE**
VERFAHREN UND ANLAGE ZUR HERSTELLUNG VON EINER ZUSATZKOMPONENTE INNERHALB EINES VULKANISIERTEN REIFENS
PROCÉDÉ ET INSTALLATION DE FABRICATION D'UN COMPOSANT SUPPLÉMENTAIRE À L'INTÉRIEUR D'UN PNEUMATIQUE VULCANISÉ

(30) Priority: 20.12.2017 IT 201700147127
(43) Date of publication of application: 28.10.2020
(73) Proprietor: Pirelli Tyre S.p.A., 20126 Milano (IT)
(72) Inventor: AMURRI, Cesare Emanuele, 20099 Sesto San Giovanni ( Mi) (IT); DE COL, Christian, 20126 Milano (IT); PUPPI, Cristiano, 20126 Milano (IT)
(74) Representative: Vittorangeli, Lucia
(86) International application number: PCT/IB2018/060172
(87) International publication number: WO 2019/123201

(56) References cited:
- EP-A1- 2 865 515
- EP-A1- 3 199 384
- WO-A1-2015/097645
- WO-A1-2016/105410
- US-A1- 2009 061 099
- US-A1- 2013 078 385

## Description

The present invention relates to a process and a plant for building an additional component within a vulcanised tyre.

"Additional component" means a component suitable for conferring certain functions to the tyre, for example a self-sealing assembly for the construction of a self-sealing tyre or a noise reducer complex.

By "vulcanised tyre" or more generally "tyre", is indicated a green tyre subsequently subjected to a moulding and vulcanisation process.

By "external surface" or "internal surface" of the tyre or portions thereof it is meant the surface intended to remain visible after the coupling of the tyre with its own mounting rim and the one intended to be no longer visible after said coupling, respectively. The internal surface and the external surface delimit the tyre.

The term "elastomeric material" is used to designate a composition comprising at least one elastomeric polymer and at least one reinforcement filler. Preferably, such composition further comprises additives such as, for example, a cross-linking agent and/or a plasticiser. Due to the presence of the cross-linking agent, such material can be cross-linked by heating, so as to form the final manufactured article.

"Deposition portion" means an area or zone of the internal surface of the vulcanised tyre intended for deposition of at least a part of the additional component.

By "relative deposition motion" it is meant the motion between the vulcanised tyre and a dispenser in order to deposit at least a part of the additional component.

The expressions "downstream" and "upstream" are used referring to the aforesaid relative deposition motion. Therefore, assuming, for example, a relative counterclockwise deposition motion (stationary dispenser and tyre in counterclockwise motion around its rotation axis or stationary tyre and dispenser in clockwise motion with respect to the rotation axis of the tyre), a "downstream" position with respect to any reference element indicates a position in a clockwise direction to said reference element and an "upstream" position indicates a counterclockwise position to said reference element. Consequently, in the case of relative clockwise deposition motion, a "downstream" position with respect to any reference element indicates a counterclockwise position to said reference element and an upstream position indicates a clockwise position to said reference element.

The expressions "low", "below", "lower" or "inferiorly", and "high", "above", "upper" or "superiorly", are used to designate a relative position of an element with respect to another with respect to the ground.

By "scanning" it is meant an operation of data, images and/or similar detection executed according to a predetermined sequence. Preferably, the data detected are relative to the distance of the internal surface of the tyre with respect to a reference.

By "image", or equivalently "digital image", it is generally meant a set of data, typically contained in a computer file, in which each coordinate (typically two-dimensional) of a finite set (typically two-dimensional and matrix, i.e. N rows x M columns) of spatial coordinates (each typically corresponding to a pixel) is associated with a corresponding set of numerical values (which may be representative of different magnitudes). For example, in monochromatic images (such as those with grey levels or "grayscale"), this set of values coincides with a single value in a finite scale (typically at 256 levels or tones), this value being representative of the brightness (or intensity) level, for example, of the respective spatial coordinate when displayed, while in colour images the set of values represents the brightness level of a multiplicity of colours, or channels, typically the fundamental colours (for example in the RGB coding red, green and blue, while in the CMYK coding cyan, magenta, yellow and black). The term "image" does not necessarily imply the actual display of the same.

Any reference to a specific "digital image" (for example, a two-dimensional digital image initially acquired on the tyre) includes more generally any digital image obtainable through one or more digital processing of said specific digital image (such as, for example, filtering, equalization, "thresholds", morphological transformations - "opening", etc., - gradient calculations, smoothing, etc.).

By "mathematical model" it is meant a set of data detected with the scan.

The term "continuous elongated element" refers to an article elongated along a dimension thereof made of a material suitable for building at least a portion of the additional component.

By "deposition parameter" it is meant a variable that is capable of influencing the deposition process of at least a portion of the additional component.

By "batch of vulcanised tyres being processed" it is meant at least two vulcanised tyres, made in the same plant, by the same machines or group of machines, with the same technical specifications.

By "self-sealing material" it is meant a polymeric material provided, after the vulcanisation of the tyre, with viscoelastic and tackiness features such as to allow the material to flow inside a perforation caused by a sharp element and to adhere and be dragged by said moving sharp element. Such polymeric material may for example comprise a synthetic or natural elastomer, an elastomeric block copolymer, process oil, at least one tackifying agent, and at least one reinforcing filler.

"Noise reducing material" means a material suitable for producing elements which, once associated with a tyre for vehicle wheels, have the ability to attenuate the noise produced by the tyre during use. A material suitable for this purpose is, for example, a sound-absorbing material, such as open-cell expanded polyurethane.

The terms "radial" and "axial" are used with reference to the radial/axial direction of the tyre itself (or a portion thereof) i.e. to a direction perpendicular/parallel to the rotation axis of the tyre.

"Annular anchoring portions" of the tyre, commonly also defined as "beads", refers to the radially internal areas of the tyre, arranged on opposite sides of an axial centreline plane of the tyre, respectively, configured so as to engage with a mounting rim. In particular, by "annular anchoring portion" it is meant at least one component of the tyre which comprises at least one bead core and preferably also a filling insert in a radially external position thereto.

WO2016105410 discloses a method for balancing a pneumatic tire including the step of applying a sealant coating annularly around the tire along the undertread region. EP2865515 discloses a method of coating a sealant composition to an inner surface of a tire.

EP3009260 describes a self-sealing tyre comprising a sealing layer obtained by spiralling a sealing material directly onto the internal surface of the vulcanised tyre rotated about the axis thereof. In particular, the vulcanised tyre is mounted on a rotating actuation device while a nozzle mounted on the tip of an extruder is inserted within the tyre. The sealing material is extruded from the extruder and deposited on the surface of the tyre maintaining a certain distance between the nozzle and the surface of the tyre. This distance is measured by means of a sensor during the application of the sealing material. A similar embodiment is disclosed in EP3199384.

The Applicant has observed that the application of additional components, such as a layer of sealing material in the case of EP3009260, may affect the uniformity of the tyre and requires particular attention.

The Applicant has in fact observed that even small unevenness in the deposition of the additional component could produce serious imbalances during the use of the tyre, especially at high speeds.

With this in mind, the Applicant has realized that the system provided in EP3009260 does not reach the level of uniformity currently required regardless of the possible defects of the tyre and the type of tyre. Firstly, the measurement of the distance between the nozzle and the surface of the tyre as described in EP3009260 may be compromised by the simultaneous deposition of the self-sealing material. Furthermore, the system described in EP3009260 does not allow a timely and extended adjustment to all those parameters which may influence the uniformity of the tyre.

The Applicant has therefore perceived the importance of being able to operate with the widest flexibility in terms of reaction times, the number of adjustable parameters and the predictability of malfunctions.

In the perception of the Applicant, the foregoing can be achieved with a precise knowledge of the deposition surface before the deposition of a layer of any additional component.

The Applicant has therefore found that by generating a mathematical model by scanning the surface on which at least one layer of said additional component will subsequently be deposited, it becomes possible to obtain an effective control over a wide range of parameters, ensuring the correct reaction times and also allowing to operate in feedback on the tyre grip device. More precisely, according to a first aspect, the invention relates to a process for building an additional component within a vulcanised tyre according to claim 1.

An action a) is provided of arranging a vulcanised tyre having an external surface and an internal surface arranged around a rotation axis of the vulcanised tyre itself and grasping said vulcanised tyre by means of a grip device.

An action b) is provided of executing a preliminary scan of at least one deposition portion of the internal surface of said vulcanised tyre.

An action c) is provided of generating a mathematical model of said at least one deposition portion on the basis of said preliminary scan.

An action d) is provided of executing a deposition process of at least one layer of said additional component directly on said at least one deposition portion.

An action e) is provided of controlling said deposition process by means of the adjusting of at least one deposition parameter as a function of the mathematical model of said at least one deposition portion.

Said deposition process comprises a sub-action d1) of positioning, at a starting position and at a relative distance from said at least one deposition portion, a dispensing nozzle configured for dispensing a continuous elongated element.

Said deposition process comprises a sub-action d2) of activating a continuous dispensing of the continuous elongated element through said dispensing nozzle.

Said deposition process comprises a sub-action d3) of generating a relative deposition motion between said dispensing nozzle and said vulcanised tyre, starting from said starting position and simultaneously with said continuous dispensing, following a trajectory according to said mathematical model adapted to make a spiral deposition of the continuous elongated element on said at least one deposition portion up to the building of said layer.

According to a second aspect, the invention relates to a plant for building an additional component within a vulcanised tyre according to claim 9.

A grip device is provided, configured for grasping a vulcanised tyre having an external surface and an internal surface arranged around a rotation axis of the vulcanised tyre itself.

A scanning head is provided, configured for executing a preliminary scan of at least one deposition portion of the internal surface of the vulcanised tyre.

A dispensing nozzle is provided, configured for dispensing a continuous elongated element of material adapted to make at least one layer of said additional component.

An actuator is provided, operatively associated with said dispensing nozzle and/or with said vulcanised tyre in order to generate a relative deposition motion between said dispensing nozzle and said vulcanised tyre in order to execute a deposition process of said layer directly on said at least one deposition portion.

A control unit is provided, configured for generating a mathematical model of said at least one deposition portion on the basis of said preliminary scan.

Said control unit is configured for controlling said deposition process by means of the adjusting of at least one deposition parameter as a function of the mathematical model of the deposition portion.

The Applicant believes that by means of this solution it is also possible to adjust those parameters which require long reaction times knowing in advance the profile of the deposition surface and thus anticipating all possible non-uniformities due to the building of the vulcanised tyre and/or to variations related to the grip device.

In one or more of the preceding aspects, the present invention may have at least one of the preferred features that follow. Preferably, the action a) comprises arranging and grasping the vulcanised tyre arranged with a vertical axis of rotation.

This solution simplifies feeding and subsequent management of the tyres.

Preferably, action a) comprises grasping the vulcanised tyre by means of a grip device configured for coming into contact with the external surface of the vulcanised tyre.

Preferably, said grip device is configured for coming into contact with the external surface of the vulcanised tyre and for grasping the vulcanised tyre from the outside, making it integral therewith in the relative deposition motion between said dispensing nozzle and said vulcanised tyre.

This solution allows maximum freedom in rotating the vulcanised tyre and in managing the deposition process within the tyre itself. Furthermore, it constitutes a reliable gripping system, which can also be used on anthropomorphic robotic arms due to the limited weight and able to allow integral movement of the vulcanised tyre and the grip device.

Preferably, said vulcanised tyre comprises annular anchoring portions each defining an access area to the internal surface of the vulcanised tyre.

Preferably, said grip device is configured to free up at least one access area of said access areas so as to allow insertion of said dispensing nozzle through said free access area.

This solution allows the vulcanised tyre to be firmly gripped at one of its sides, leaving access to the dispensing nozzle completely free.

Preferably, the grip device is made in the form of a gripper.

Preferably, said grip device comprises a plurality of jaws extended in axial direction along a rotation axis of the vulcanised tyre and distributed circumferentially with respect to the vulcanised tyre itself.

Preferably, the jaws are movable radially with respect to a frame of the grip device, remaining substantially parallel to the axial direction with respect to the vulcanised tyre.

Preferably, the jaws have a first free end and a second end mounted on the frame and radially sliding with respect to it.

Preferably, the jaws can be joined in groups, each group preferably comprising two jaws joined by a slide arranged at the second end of each jaw.

Preferably, the grip device may comprise a central mechanism configured to move all the jaws simultaneously and by an equal extent.

Preferably, the grip device may assume a release configuration in which the jaws are arranged in a radially external position and are located at a mutual radial distance greater than the maximum diameter of the vulcanised tyre, and a gripping configuration in which the jaws are arranged in a radially internal position and are located at a mutual radial distance such as to contact each gripper with the external surface of the vulcanised tyre.

Preferably, in the gripping configuration the jaws retain the vulcanised tyre making it integral with the grip device.

Preferably, an actuation device is configured to operate the grip device from the grip configuration to the release configuration, and vice versa.

Preferably, the functions and/or the structure of said actuation device are integrated in a support member, preferably an anthropomorphic robotic arm with at least 6 axes, even more preferably with 7 axes, configured to support said grip device.

Preferably, said action b) is executed by means of said scanning head.

Preferably, said scanning head comprises an emitter of electromagnetic waves, more preferably of the laser type, or a camera or a probe.

Using these devices simplifies scanning. Furthermore, the use of remote scanning heads, such as the electromagnetic wave emitter or the camera, facilitates the use thereof also during the deposition process, for example to execute a control scan, avoiding direct contact with the internal surface of the tyre.

Preferably, the action b) comprises detecting, at a plurality of points of the internal surface, respective distances of the internal surface itself with respect to a reference.

Preferably, said scanning head is configured to detect, at a plurality of points of the internal surface of the vulcanised tyre, respective distances of the internal surface with respect to a reference.

Preferably, said reference consists of the scanning head or the rotation axis of the vulcanised tyre.

The detection of distances allows obtaining in a simple and reliable way a mathematical model that represents the real profile of the tyre.

Preferably, the action b) comprises the sub-action b1) of positioning, at a starting position, a scanning head configured for scanning said at least one deposition portion.

Preferably the action b) comprises the sub-action b2) of activating said scanning head.

Preferably, the action b) comprises the sub-action b3) of generating a relative scanning motion between said scanning head and said at least one deposition portion, starting from said starting position and simultaneously with said activation.

Preferably, said relative scanning motion coincides with said relative deposition motion.

In this way, the scanning action and the subsequent deposition process are optimised, both operated on the basis of a spiral trajectory of the scanning head and/or the dispensing nozzle.

Preferably, said mathematical model is a digital model or a 3D image of the internal surface.

Preferably, the action c) comprises storing distances detected in the course of the action b), at a plurality of points of the internal surface of the vulcanised tyre, with respect to a reference.

Preferably, said mathematical model is a set of data corresponding to the distances of the internal surface of the vulcanised tyre with respect to a reference.

In this way, a mathematical model of the real profile of the deposition portion is easily obtained.

Preferably, the dispensing nozzle is oriented so that the continuous elongated element is arranged in a substantially vertical direction, with a downwardly directed dispensing direction. In this way, the deposition process is simplified.

Preferably, the vulcanised tyre is integral with the grip device in action d3). In this way, the assembly consisting of the grip device and of the vulcanised tyre is moved directly by the support member, avoiding possible misalignments between the vulcanised tyre and the gripping device.

Preferably, said relative deposition motion comprises a relative angular speed about said axis of rotation of the vulcanised tyre.

Preferably, said vulcanised tyre is rotated about its own rotation axis.

Preferably, said actuator comprises a rotational actuator, preferably of a modulatable type, configured to rotate said vulcanised tyre about said rotation axis.

Even more preferably, the angular speed of said vulcanised tyre is equal to said relative angular speed.

The rotation of the vulcanised tyre integral with the grip device simplifies the deposition process.

Preferably said relative deposition motion comprises a relative axial translation speed parallel to said rotation axis of the vulcanised tyre.

Preferably, said dispensing nozzle and/or said vulcanised tyre translate parallel to said rotation axis of the vulcanised tyre.

Preferably, said actuator comprises a translational actuator, preferably of a modulatable type, configured to generate a relative translation, parallel to said rotation axis of the vulcanised tyre, between said dispensing nozzle and said vulcanised tyre.

Even more preferably, the axial translation speed of the dispensing nozzle or of the vulcanised tyre is equal to said relative axial translation speed.

Preferably, in action d) a layer is deposited that is made of self-sealing material of an additional component, attained as self-sealing complex.

Preferably, in action d) a layer is deposited that is made of noise reducing material of an additional component, attained as a noise reducer complex. Preferably, in action d) a layer is deposited that is made of adhesive material adapted to be associated at least with noise reducer elements in order to make an additional component attained as a noise reducer complex.

Preferably, said deposition parameter is a relative distance between the dispensing nozzle and said at least one deposition portion.

Preferably, adjusting said relative distance comprises modifying the radial position of the dispensing nozzle with respect to said at least one deposition portion according to the mathematical model of said at least one deposition portion.

Even more preferably, adjusting said relative distance comprises modifying the radial position of the dispensing nozzle with respect to said at least one deposition portion in order to maintain constant said relative distance.

The relative distance control allows obtaining a regular, uniform and accurate layer on the internal surface of the vulcanised tyre.

Preferably, an adjusting member is provided for adjusting the radial position of the dispensing nozzle with respect to said at least one deposition portion.

Preferably, said control unit is operatively associated with said adjusting member to adjust a relative distance of the dispensing nozzle with respect to said at least one deposition portion according to the mathematical model of said at least one deposition portion.

Preferably, the adjusting member is configured to move the grip device and the vulcanised tyre integrally thereto perpendicular to the rotation axis of the tyre itself.

Preferably, the functions and/or the structure of said adjusting member are integrated into a support member.

More preferably, said support member is an anthropomorphic robotic arm with at least 6 axes, even more preferably with 7 axes, configured to support said grip device. This simplifies the structure and management of the plant.

Alternatively, the functions and/or the structure of said adjusting member are integrated in a support member of the dispensing nozzle, said adjusting member preferably comprising a sliding guide and a motor associated at least to the dispensing nozzle, preferably also to the scanning head.

Preferably, said deposition parameter is an orientation of the continuous longitudinal element with respect to said at least one deposition portion.

Preferably, adjusting said orientation of the continuous elongated element comprises modifying the tilt of the dispensing nozzle with respect to said at least one deposition portion for adjusting said orientation as a function of the mathematical model of said at least one deposition portion.

Even more preferably, adjusting said orientation of the continuous elongated element comprises modifying the tilt of the dispensing nozzle with respect to said at least one deposition portion in order to maintain said continuous elongated element perpendicular to said at least one deposition portion.

The control of the tilt of the continuous elongated element allows obtaining a regular, uniform and accurate coating of the surface of the tyre. Furthermore, it constitutes a degree of freedom to better define the quantity of material to be deposited according to the mathematical model of the deposition portion.

Preferably, a tilting device is provided for modifying the tilt of the dispensing nozzle with respect to said at least one deposition portion.

Preferably, said control unit is operatively associated with said tilting device for adjusting an orientation of the continuous elongated element with respect to said at least one deposition portion according to the mathematical model of said at least one deposition portion.

Preferably, the functions and/or the structure of said tilting device are integrated into a support member of the dispensing nozzle.

As an alternative, the functions and/or the structure of said tilting device are integrated in a support member, preferably an anthropomorphic robotic arm with at least 6 axes, even more preferably with 7 axes, configured to support said grip device. This simplifies the structure and management of the plant.

Preferably, said deposition parameter is a flow rate of the continuous elongated element.

Preferably, adjusting said flow rate of the continuous elongated element comprises driving a dispensing device of modulatable type operatively associated with the dispensing nozzle as a function of the mathematical model of said at least one deposition portion.

Preferably, the plant comprises a modulatable dispensing device operatively associated with the dispensing nozzle.

Preferably, said control unit is operatively connected to said dispensing device and is configured to control said dispensing device according to the mathematical model of said at least one deposition portion.

Flow control constitutes a degree of freedom to better define the quantity of material to be deposited according to the mathematical model of the deposition portion.

Preferably, said deposition parameter is a speed of said relative deposition motion.

Preferably, adjusting said speed comprises controlling an actuator of a modulatable type operatively associated with said dispensing nozzle and/or said vulcanised tyre for adjusting said speed.

In the case in which said relative deposition motion comprises said relative angular speed about said rotation axis of the vulcanised tyre, preferably said deposition parameter is said relative angular speed.

Preferably, said control unit is operatively connected to said rotational actuator to adjust said relative angular speed.

In the case in which said relative deposition motion comprises said relative axial translation speed parallel to said rotation axis of the vulcanised tyre, preferably said deposition parameter is said relative axial translation speed.

Preferably, said control unit is operatively connected to said translational actuator to adjust said relative axial translation speed.

Preferably during said deposition process, it is provided to execute a control scan of zones of said at least one deposition portion arranged immediately downstream of said dispensing nozzle with reference to said relative deposition motion.

It is preferably provided during said deposition process to compare zone by zone said preliminary scan and said control scan.

It is preferably provided during said deposition process to generate said relative deposition motion in a manner such that, zone by zone, said dispensing nozzle follows said trajectory according to said mathematical model.

Even more preferably, said deposition process is controlled as a function of said mathematical model and of said comparison between the preliminary scan and the control scan.

In this way, it is possible to effectively anticipate any unevenness of the deposition portion.

Preferably, said scanning head is arranged immediately downstream of said dispensing nozzle with respect to said relative deposition motion and is further configured for executing a control scan of zones of said at least one deposition portion.

Preferably, said control scan is executed by said scanning head.

Alternatively, said control scan is executed by a further scanning head to separate the deposition process from the preliminary scan.

Preferably, it is provided to arrange a mathematical reference model as a function of the specifications of a batch of vulcanised tyres being processed.

Preferably, it is provided to compare the mathematical model of a vulcanised tyre of said batch and said mathematical reference model before executing said deposition process.

Preferably, it is provided to enable or disable said deposition process as a function of said comparison between said mathematical model and said mathematical reference model.

In this way, in the event that the vulcanised tyre is not suitable, it is possible to avoid possible scraps at the end of the process.

Preferably, arranging a mathematical reference model comprises storing a first mathematical model of a first vulcanised tyre of said batch, subjected to actions a) to e), as mathematical reference model.

This simplifies the acquisition and management of reference models.

Preferably, it is provided to provide a batch of vulcanised tyres being processed, subject to actions a) to e) a group of at least two vulcanised tyres of said batch and subject a further vulcanised tyre of said batch to actions a) ac) to generate the mathematical model of said at least one deposition portion of said further vulcanised tyre.

Preferably, it is provided to compare the respective mathematical model with the mathematical models of the deposition portions of said vulcanised tyres of said group previously subjected to actions d) and e) and attributing a comparison value to each comparison in order to obtain a sequence of comparison values, before executing the actions d) and e) for said further vulcanised tyre.

Preferably, it is provided to generate a feedback signal when said sequence of comparison values tends to exit from a set of acceptable comparison values, said feedback signal being configured for activating at least one from among: adjusting a grip device used in the action a), maintaining a grip device used in the action (a).

Preferably, the control unit is operatively associated with the driving device and is configured to activate said adjustment or maintenance.

In this way, it is possible to solve any hysteresis of the grip device which influence the mathematical model, in particular the profile of the deposition portion.

Preferably, a scanning and dispensing unit is provided, comprising said scanning head and said dispensing nozzle.

Preferably, the scanning head and the dispensing nozzle are associated with the same support member.

Alternatively, a scanning unit is provided comprising said scanning head and a dispensing unit comprising said dispensing nozzle, said scanning unit and said dispensing unit being separated from each other.

In this way, it is possible to separate the preliminary scan from the deposition process.

Preferably, it is provided to subject, to actions d) and e), a vulcanised tyre previously subjected to actions a) to c) while a further vulcanised tyre is subjected to actions a) to c).

Preferably, the system comprises a waiting station configured to receive the grip devices associated with the respective vulcanised tyre already subjected to actions a) to c) and waiting to be submitted to actions d) and e).

Preferably, the waiting station is configured to receive the grip devices associated with the respective vulcanised tyre in transit from the scanning unit to one of the dispensing units.

Preferably, said dispensing unit comprises a further scanning head arranged immediately downstream of said dispensing nozzle with respect to said relative deposition motion and configured for executing a control scan of zones of said at least one deposition portion.

Preferably, said further scanning head comprises an emitter of electromagnetic waves, more preferably of the laser type, or a camera or a probe.

Preferably, executing a control scan comprises detecting, at a plurality of points of the internal surface, respective distances of the internal surface itself with respect to a reference.

Preferably, said further scanning head is configured to detect, at a plurality of points of the internal surface of the vulcanised tyre, respective distances of the internal surface with respect to a reference.

Preferably, said reference consists of the further scanning head or the rotation axis of the vulcanised tyre.

Preferably, a plurality of dispensing units is provided for each scanning unit.

Preferably, it is provided to subject to actions d) and e) a plurality of vulcanised tyres previously subjected to actions a) to c) while said further vulcanised tyre is subjected to actions a) to c).

In this way, it is possible to optimize the times of the building process of the additional component.

Preferably, the sequence of the actions from a) to c) is executed in a first cycle time and the sequence of the actions d) and e) is executed in a second cycle time, equal to the first cycle time.

Preferably, it is provided to subject to actions d) and e) a number of vulcanised tyres previously subjected to actions a) to c) equal to the integer immediately higher than n, while said further vulcanised tyre is subjected to actions a) to c).

Preferably, said scanning unit has a first cycle time and each dispensing unit has a second cycle time, equal to n times the first cycle time, said plant comprising for each scanning unit a number of dispensing units equal to the integer immediately higher than n.

This reduces the delays due to the dispensing process. Preferably, said vulcanised tyre is subjected to actions a) to e), remaining associated with the same grip device.

In this way, the preliminary scan executed and which also takes into account the deformations induced by the grip device is univocally associated with the vulcanised tyre during the whole process of building the additional component.

Preferably, at least one support member is provided, preferably an anthropomorphic robotic arm with at least 6 axes, even more preferably with 7 axes, comprising said actuator and configured to support said grip device.

Preferably, the functions and/or the structure of the rotational actuator and/or of the translational actuator are integrated in a support member, preferably an anthropomorphic robotic arm with at least 6 axes, even more preferably with 7 axes, configured to support said grip device. This simplifies both the structure and the management of the system.

Preferably, it is provided to support and move said grip device in the actions a) to e) by at least one support member, preferably an anthropomorphic robotic arm with at least 6 axes, even more preferably with 7 axes.

Preferably, the grip device can be released from the support member. In this way, it is possible to divide the building process of the additional component, avoiding repeating the preliminary scan.

Preferably, a first support member is preferably provided, preferably a first anthropomorphic robotic arm with at least 6 axes, even more preferably with 7 axes, and a second support member, preferably a second anthropomorphic robotic arm having at least 6 axes, even more preferably 7 axes.

Preferably, the plant comprises at least two grip devices.

Preferably, said grip device in actions a) to c) is supported and moved by a first support member, preferably by a first anthropomorphic robotic arm with at least 6 axes, even more preferably with 7 axes, and in actions d) and e) it is supported and moved by a second support member, preferably by a second anthropomorphic robotic arm with at least 6 axes, even more preferably with 7 axes.

Preferably, said vulcanised tyre comprises anchoring annular portions, each delimiting an area of access to the internal surface of the vulcanised tyre, and wherein action a) comprises leaving free at least one area of access of said access areas so as to allow the insertion of said dispensing nozzle through said free access area.

Preferably, it is provided to complete the building of the additional component on the internal surface of the vulcanised tyre, by associating further elements and/or layers of said additional component with said layer.

Preferably, a completion station is provided, configured for completing the building of the additional component on the internal surface of the vulcanised tyre by associating said layer with further elements and/or layers of said additional component.

Preferably, it is provided to subject the vulcanised tyre comprising at least said layer of said additional component to a thermal stabilisation treatment.

Preferably, a stabilisation station is provided, configured for subjecting the vulcanised tyre comprising at least said layer of said additional component to a thermal stabilisation station.

Further features and advantages will become apparent from the following description of a plant and a process for building an additional component within a vulcanised tyre, provided as a non-limiting example with reference to the accompanying figures, in which:
- figure 1 is a schematic, radial half-sectional view of a tyre provided with specific functions according to a first embodiment;
- figure 2 is a schematic, radial half-sectional view of a tyre provided with specific functions according to a second embodiment;
- figure 3 shows a schematic side view of a plant for building an additional component within a vulcanised tyre according to a possible embodiment;
- figure 3A illustrates a schematic plan view of a plant for building an additional component within a vulcanised tyre according to a possible embodiment;
- figure 4 shows a schematic perspective view of a grip device used in a plant for building an additional component within a vulcanised tyre;
- figure 5 and figure 6 respectively show a schematic perspective view of a scanning and dispensing unit used in a plant for building an additional component within a vulcanised tyre;
- figure 7 shows a schematic side view of a plant for building an additional component within a vulcanised tyre according to a possible embodiment;
- figures 8-12 show details of the plant of figure 3 or of figure 7 at different operating moments;
- figure 13 illustrates a schematic plan view of a plant for building an additional component within a vulcanised tyre according to a possible embodiment.

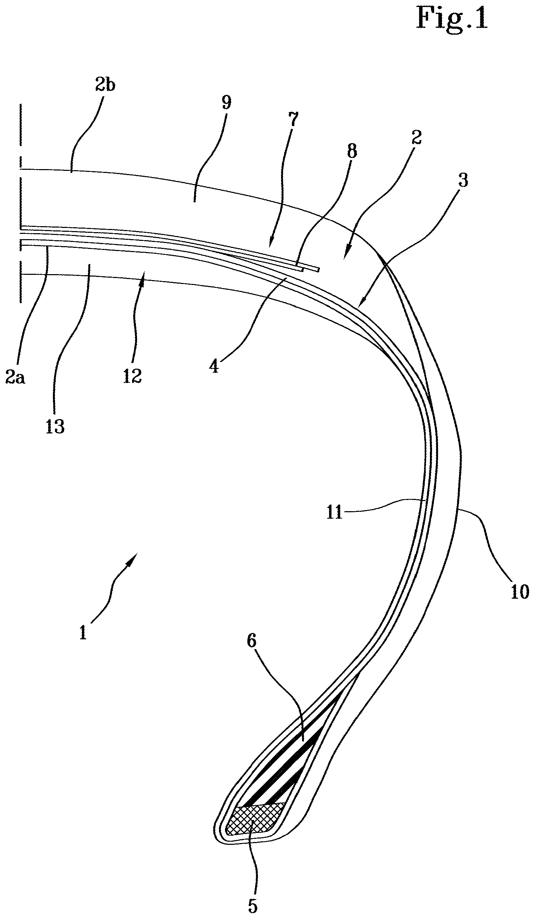

With reference to figure 1, reference numeral 1 indicates a tyre with specific features, for example self-sealing or noise reduction. Such tyre 1 is obtained starting from a vulcanised tyre 2 having an internal surface 2a and an external surface 2b arranged around a rotation axis of the tyre itself.

According to a possible embodiment, the vulcanised tyre 2 comprises a carcass structure 3 comprising at least one carcass ply 4.

The carcass ply 4 comprises a plurality of textile or metal reinforcement cords arranged parallel to each other and at least partially covered with a layer of elastomeric material.

The carcass ply 4 has respectively opposite terminal flaps engaged to respective bead cores 5. Each bead core may possibly be associated with a filling insert 6 arranged in a radially external position with respect to the bead core. The area defined by the end flap of the carcass ply 4 folded around the bead core 5, and possibly the filling insert 6, defines an annular anchoring portion or bead intended to engage with its own mounting rim. Each annular anchoring portion delimits an access area to the internal surface 2a of the vulcanised tyre 2.

The carcass structure 3 is associated with a belt structure 7 comprising one or more belt layers 8 placed in radial superposition with respect to one another and with respect to the carcass ply 4.

Said at least one belt layer 8 has reinforcing cords, typically metallic, which may have a crosswise orientation with respect to the circumferential development direction of the vulcanised tyre 2. The belt structure 7 may further comprise at least one radially external layer also referred to as layer at zero degrees which comprises cords arranged according to a substantially zero angle with respect to the circumferential development direction of the tyre.

A tread band 9 is applied in a position radially external to the belt structure 7, made of an elastomeric material like other components of the vulcanised tyre 2.

Respective sidewalls 10 of an elastomeric material are further applied in axially external position on the lateral surfaces of the carcass structure 3, each extending from one of the lateral edges of the tread band 9 up to the bead cores 5.

In a radially internal position, a layer of elastomeric material substantially impermeable to air or so-called liner 11 may also be provided.

The vulcanised tyre 2 may comprise further components and/or have a different configuration with respect to that illustrated in figure 1, depending on the type of vehicle and/or the conditions of use for which it is intended.

To obtain the tyre 1 having specific features, an additional component 12 is arranged within the vulcanised tyre 2. For example, the additional component may be a self-sealing assembly for making a self-sealing tyre or a noise reducer assembly.

The additional component 12 comprises, for example, at least one layer 13. The layer 13 is in direct contact with the internal surface 2a, for example with the liner 11, at a deposition portion of the internal surface 2a of the vulcanised tyre 2.

The layer 13 extends over the entire circumferential development of the vulcanised tyre 2.

According to some examples, layer 13 may be made of self-sealing material, or of noise reducing material, or of adhesive material.

According to what illustrated in figure 1, the additional component 12 consists of the layer 13, for example of self-sealing material or noise reducing material. Alternatively, two or more layers may be provided side by side and/or overlapped.

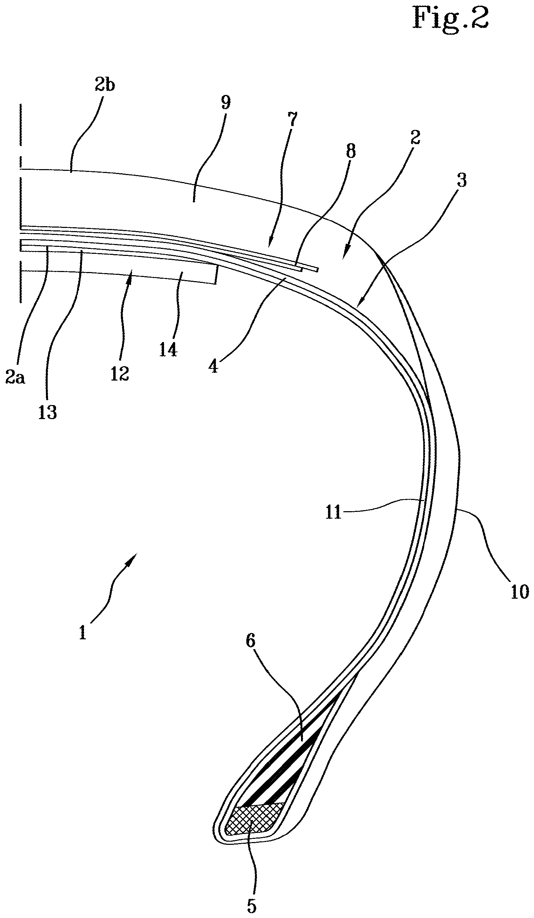

According to what is illustrated in figure 2, the additional component 12 comprises the layer 13 associated with further elements. For example, the layer 13 is a layer of adhesive material associated with noise reducer elements 14. Also in this case, in addition to the additional elements, further layers can be provided side by side and/or overlapped.

A tyre 1, for example as previously described, is made in a plant 100 for building an additional component 12 within a vulcanised tyre 2. In use, the system 100 is suitable for implementing a process for building an additional component 12 within the vulcanised tyre 2.

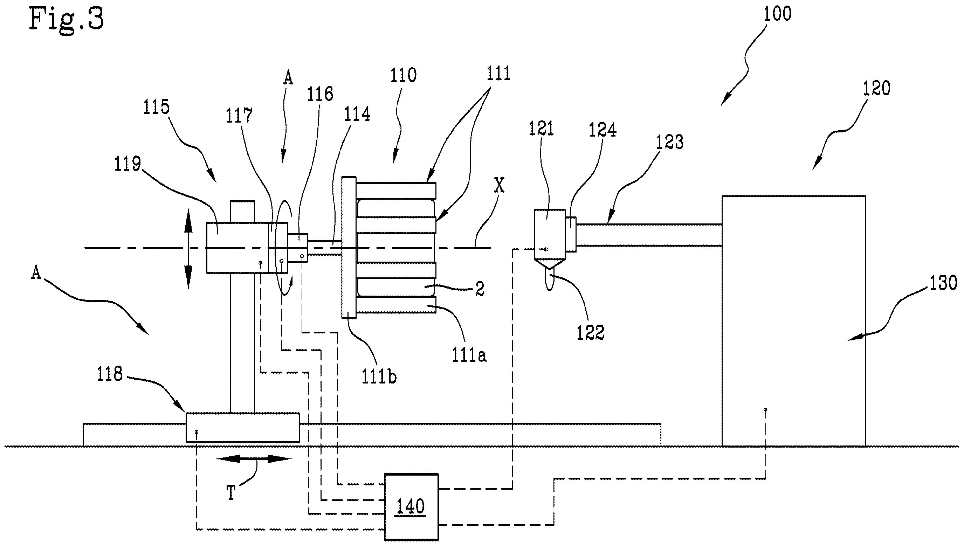

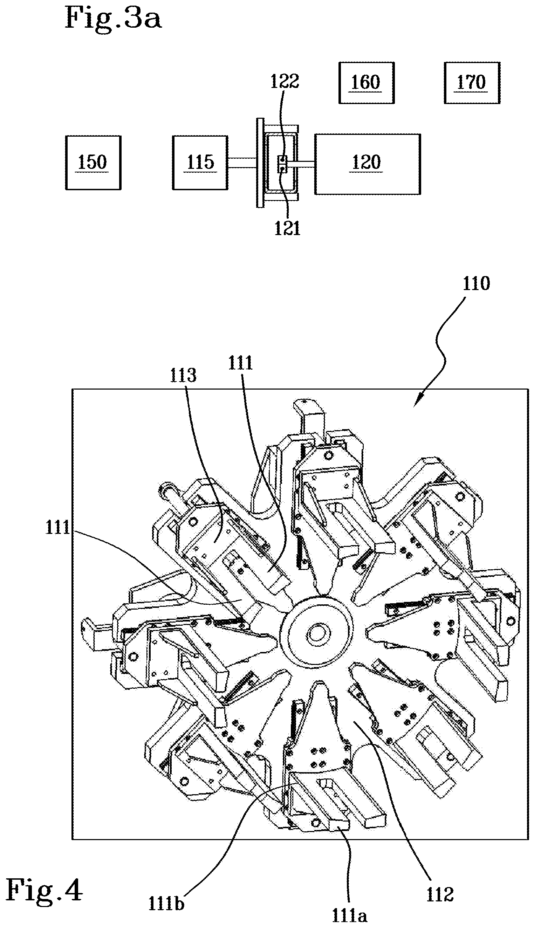

A possible example of a plant 100 as shown in figure 3 and in figure 3A will be described below.

The plant 100 comprises a gripping device 110 configured to grip the vulcanised tyre 2. In particular, the grip device 110 is configured to grip the vulcanised tyre 2 from the outside, coming into contact with the external surface 2b of the vulcanised tyre itself.

According to the example shown, the grip device 110 comprises a plurality of jaws 111 extended in axial direction along a rotation axis "X" of the vulcanised tyre 2 and distributed circumferentially with respect to the vulcanised tyre itself. In other words, the grip device 110 is made in the form of a gripper.

Preferably, the jaws 111 are movable radially with respect to a frame 112 of the grip device itself, remaining substantially parallel to the axial direction with respect to the vulcanised tyre 2. In this way the grip device 110 can assume a release configuration and a grip configuration. In the release configuration, the jaws 111 are arranged in a radially external position and are at a reciprocal radial distance greater than the maximum diameter of the vulcanised tyre 2. In the gripping configuration, the jaws 111 are arranged in a radially internal position in which they are at a reciprocal radial distance such as to contact each gripper 111 with the external surface 2b of the vulcanised tyre 2.

In the gripping configuration, the jaws 111 retain the vulcanised tyre making it integral with the grip device 110 in the movements associated with the building process of the additional component 12, in particular with a deposition process of the layer 13, as will be described below.

Moreover, the grip device 110 is configured to leave at least one access area of the vulcanised tyre 2 free. With reference to the illustrated example, the jaws 111 have a first free end 111a and a second end 111b mounted on the frame 112 and radially sliding relative thereto. When the grip device 110 grips a vulcanised tyre 2, the frame 112 is arranged to close an access area of the vulcanised tyre itself, leaving the other axially opposite access area free.

According to a possible example, illustrated in figure 4, the jaws 111 can be joined in groups. Preferably each group comprises two jaws 111 joined by a slide 113 arranged at the second end 111b of each gripper 111. The slide 113 is mounted on the frame 112 radially sliding with respect to it to modify the radial position of the jaws 111 and therefore the configuration of the grip device 110.

The grip device 110 may comprise a central mechanism, not shown in that it is of a substantially known type, configured to move all the jaws simultaneously and by an equal extent. Preferably, the grip device 110 comprises a tang 114 extending axially from the frame 112 and away from the jaws 111.

The plant 100 comprises a support member 115 configured at least to support the grip device 110. Preferably, the grip device 110 can be disengaged from the support member 115 which holds it at the tang 114.

According to what is illustrated in figure 3, the support member 115 is configured to operate the grip device 110 from the grip configuration to the release configuration, and vice versa. For this purpose, the support member 115 comprises an actuation device 116. For example, the actuation device 116 is configured to operate the grip device 110 by the radial movement of the jaws 111, for example through the central mechanism.

According to what is illustrated in figure 3, the support member 115 is further configured to impose on the grip device 110, and therefore on the vulcanised tyre 2 integral with it, one or more movements associated with the deposition process of the layer 13, as will be described below. For this purpose, the support member 115 comprises an actuator "A" comprising for example a rotational actuator 117 and a translational actuator 118. The support member 115 further comprises an adjusting member 119.

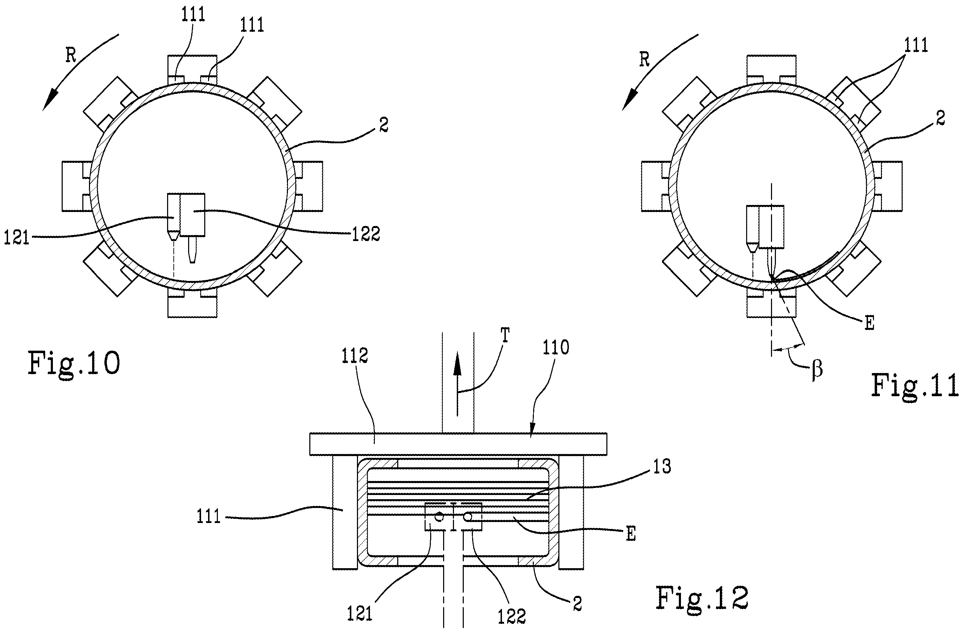

The rotational actuator 117, preferably of a modulatable type, is configured to rotate the grip device 110 and integrally thereto the vulcanised tyre 2, about the rotation axis "X" of the same tyre with angular speed "R" (figure 10 or 11).

The translational actuator 118, preferably of the modular type, is configured to translate the grip device 110 and integrally thereto the vulcanised tyre 2 parallel to the rotation axis "X" of the same tyre with axial translation speed "T".

Preferably, the adjusting member 119 is configured to move the grip device 110 and the vulcanised tyre integrally thereto 2 perpendicular to the rotation axis "X" of the tyre itself.

Again with reference to figure 3, the plant 100 comprises a scanning and dispensing unit 120 comprising a scanning head 121 and a dispensing nozzle 122.

The scanning and dispensing unit 120 is positioned relative to the grip device 110 so as to allow insertion of the dispensing nozzle 122 through the access area of the vulcanised tyre 2 left free by the grip device 110.

The scanning head 121 is configured to execute a preliminary scan at least of the deposition portion of the internal surface 2a of the vulcanised tyre 2 and possibly a control scan of areas of the deposition portion.

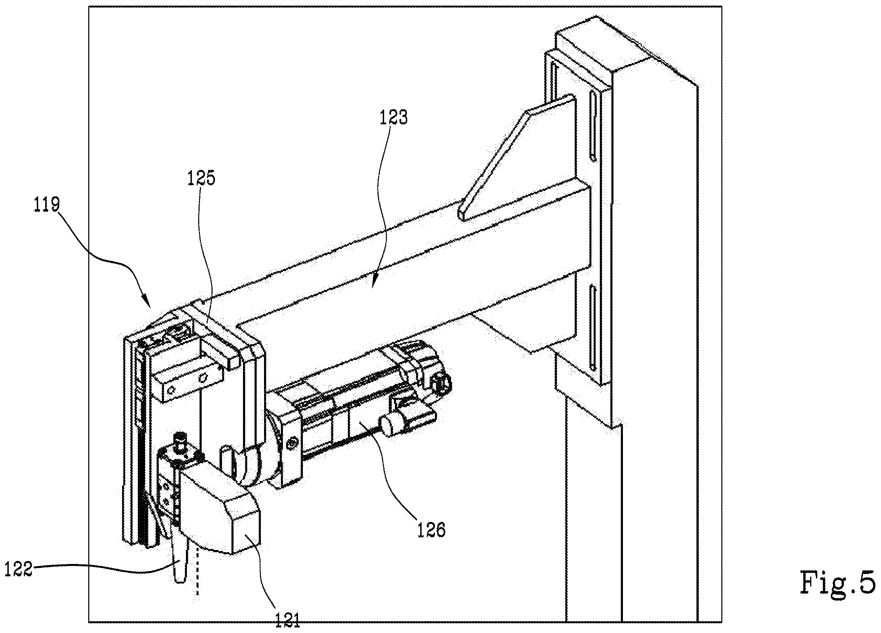

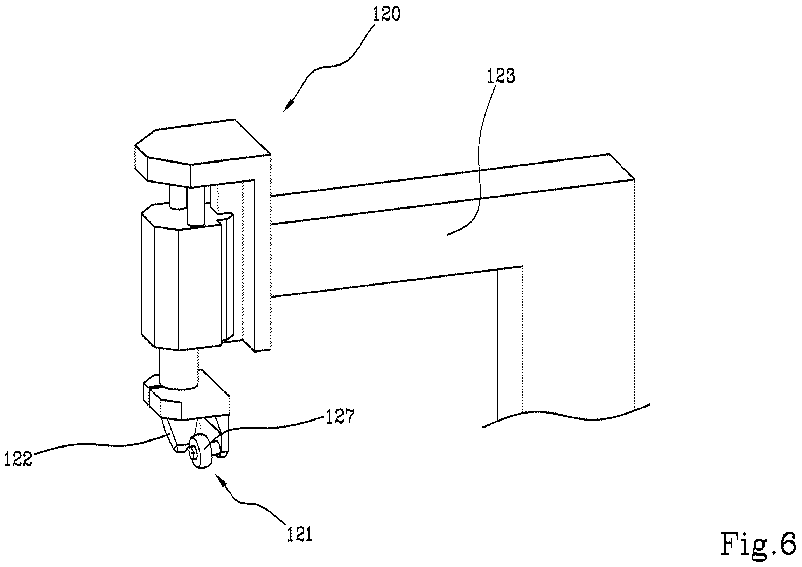

For example, the scanning head may comprise an emitter of electromagnetic waves, more preferably of the laser type (figure 5) or a camera or a probe (figure 6) or other apparatuses suitable for the purpose. Preferably, the scanning head 121 is configured to detect, at a plurality of points of the internal surface 2a of the vulcanised tyre 2, respective distances of the internal surface with respect to a reference, for example consisting of the scanning head itself or from the rotation axis "X" of the vulcanised tyre 2.

The dispensing nozzle 122 is configured to dispense a continuous elongated element "E" obtained from a material suitable for making the layer 13 of the additional component 12 directly on the deposition portion of the internal surface 2a.

The scanning head 121 and the dispensing nozzle 122 are associated with the same support member 123 and at least the dispensing nozzle 122 is oriented such that the continuous elongated element "E" is arranged in a substantially vertical direction, with downward dispensing direction.

The scanning head 121 is arranged immediately downstream of the dispensing nozzle 122 with respect to the angular speed "R" of the vulcanised tyre 2 (i.e. with respect to a relative deposition motion as better illustrated hereafter).

As illustrated in figure 3, the support member 123 structurally and/or functionally integrates a tilting device 124 configured to modify the tilt of at least the dispensing nozzle 122 with respect to the deposition portion so as to adjust an orientation β of the continuous elongated element "E" with respect to the deposition portion itself. Further movements associated with the deposition process of the layer 13 are carried out by the support member 115 by means of the actuator "A", in particular the rotational actuator 117 and the translational actuator 118, and by means of the adjusting member 119.

With reference to the plant in figure 3, the actuator "A" is operatively associated with the deposition portion to generate a relative deposition motion between the dispensing nozzle 122 and the deposition portion itself. The grip device 110 is then configured to grip the vulcanised tyre 2 from the outside making it integral with it in the relative deposition motion between the dispensing nozzle 122 and the vulcanised tyre 2. Moreover, the scanning head 121 is then arranged immediately downstream of the dispensing nozzle 122 with respect to said relative deposition motion, in particular if the scanning head 121 is configured to perform a control scan of areas of the deposition portion during the deposition process.

With reference to the plant in figure 3, the rotational actuator 117, by rotating the grip device 110 about the rotation axis "X" of the vulcanised tyre 2 and the vulcanised tyre itself integrally therewith, is able to generate a relative rotation between the dispensing nozzle 122 and the vulcanised tyre 2. The angular speed "R" of the grip device 110 is equal to the relative angular speed which constitutes a component of the relative deposition motion.

Again with reference to the plant in figure 3, the translational actuator 118, by translating the grip device 110 and the vulcanised tyre 2 integrally therewith, is able to generate a relative translation, parallel to the rotation axis "X" of the vulcanised tyre, between the dispensing nozzle 122 and the vulcanised tyre 2. The axial translation speed "T" is equal to the relative axial translation speed which constitutes a component of the relative deposition motion.

According to a possible alternative, the actuator "A", in particular the translational actuator 118, can be associated with the dispensing nozzle 122. For example, the translational actuator 118 may be integrated into the support member 123 rather than into the support member 115 to generate a translation of the scanning head 121 and of the dispensing nozzle 122 with respect to said vulcanised tyre 2.

With reference to the plant in figure 3, the adjusting member 119, by moving the gripping device 110 and the vulcanised tyre 2 integrally connected therewith perpendicularly to the rotation axis "X" of the tyre itself, is able to adjust the radial position of the dispensing nozzle with respect to the vulcanised tyre 2 and hence the relative distance "D" of the dispensing nozzle 122 with respect to the deposition portion.

According to a possible alternative, the adjusting member 119 can be associated with the dispensing nozzle 122.

Figure 5, in addition to showing an example of embodiment of the scanning head 121, also shows a possible embodiment of this alternative in which the adjusting member 119 is integrated into the support element 123 instead of the support member 115 and, for example, comprises a sliding guide 125 and a motor 126 associated at least to the dispensing nozzle 122, preferably also to the scanning head 121. In the embodiment illustrated in figure 5, the scanning head 121 is made by an emitter of electromagnetic waves, preferably of the laser type, although different types of scanning heads can be provided.

Figure 6 shows a further exemplary embodiment in which the scanning head 121 is in the form of a feeler, comprising a wheel 127 adapted to roll against the deposition portion.

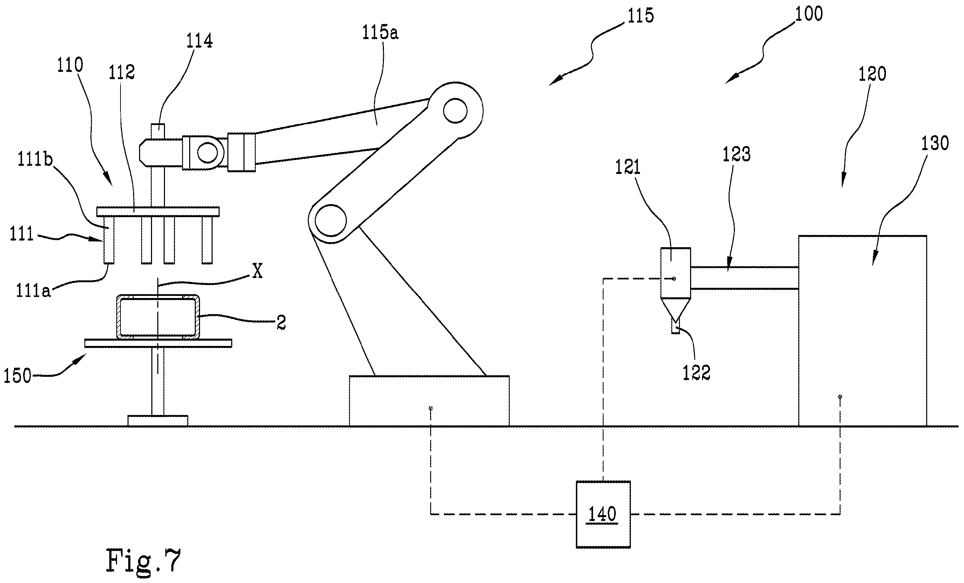

As an alternative to what has been described with reference to figure 3, as for example shown in figure 7, the support member 115 can comprise or be implemented by an anthropomorphic robotic arm 115a with at least 6 axes, preferably with 7 axes, configured at least to support the grip device 110. Preferably, the grip device 110 can be disengaged from the anthropomorphic robotic arm 115a and in particular the anthropomorphic robotic arm 115a is configured to grasp the grip device 110 by means of the tang 114.

As illustrated in figure 7, the anthropomorphic robotic arm 115a integrates the structure and/or function of one or more of:
- the actuation device 116 to operate the grip device 110 from the grip configuration to the release configuration, and vice versa,
- the actuator "A" operatively associated with the vulcanised tyre 2 to generate the relative deposition motion between the dispensing nozzle 122 and said vulcanised tyre 2,
- the adjusting member 119 to move the grip device 110 and the vulcanised tyre integrally thereto 2 perpendicular to the rotation axis "X" of the tyre itself,
- the tilting device 124 for modifying the tilt of the dispensing nozzle 122 with respect to the vulcanised tyre 2.

In particular, the anthropomorphic robotic arm 115a integrates the structure and/or function of one or more of:
- the rotational actuator 117 to rotate the grip device 110 and , integrally thereto the vulcanised tyre 2 about the rotation axis "X" of the same tyre with angular speed "R",
- the translational actuator 118 to translate the grip device 110 and integrally thereto the vulcanised tyre 2 parallel to the rotation axis "X" of the same tyre with axial translation speed "T".

Preferably, the anthropomorphic robotic arm 115a integrates all the aforesaid functions whereby the anthropomorphic robotic arm 115a is configured to support, actuate, move and adjust the grip device 110 in the actions associated with the deposition process of the layer 13, as will be described below.

With reference to both figure 3 and figure 7, the plant 100 comprises a dispensing device 130, preferably of a modulatable type, operatively associated with the dispensing nozzle 122 for feeding it with the material of the continuous elongated element "E".

With reference to both figure 3 and figure 7, the plant 100 further comprises a control unit 140.

With reference to figure 7, the plant 100 comprises a feeding device 150 configured to provide a vulcanised tyre 2 arranged with the vertical rotation axis "X" so as to be able to be gripped by the grip device 110.

As shown in figure 3a, the plant 100 may comprise a completion station 160 configured for completing the building of the additional component 12 on the internal surface 2a of the vulcanised tyre 2 by associating the layer 13 with further elements and/or layers of the additional component 12.

The plant 100 may comprise a stabilisation station 170 configured to subject the vulcanised tyre 2 comprising at least the layer 13 of the additional component 12, preferably the finished additional component, to a thermal stabilisation treatment.

In use, for example with reference to the plant in figure 3 or 7, it is provided to execute an action a) by preparing a vulcanised tyre 2 and grasping it by means of the grip device 110.

In the case where the vulcanised tyre 2 is provided by means of the feeding device 150, the vulcanised tyre 2 is gripped arranged with a vertical rotation axis "X" (figure 7).

In the case of the plant in figure 7, the anthropomorphic robotic arm 115a is placed on the vulcanised tyre 2 with the grip device 110 in the release position. The anthropomorphic robotic arm 115a lowers the grip device 110 so as to surround the vulcanised tyre 2 and the actuation device 116 actuates the grip device 110 from the release configuration to the grip configuration, in which the grip device 110 grips the vulcanised tyre 2 from the outside, coming in contact with the external surface 2b of the vulcanised tyre and making it integral with the grip device 110.

In grasping the vulcanised tyre 2, the gripping device 110 is arranged to close an access area of the vulcanised tyre, leaving the other axially opposite access area free.

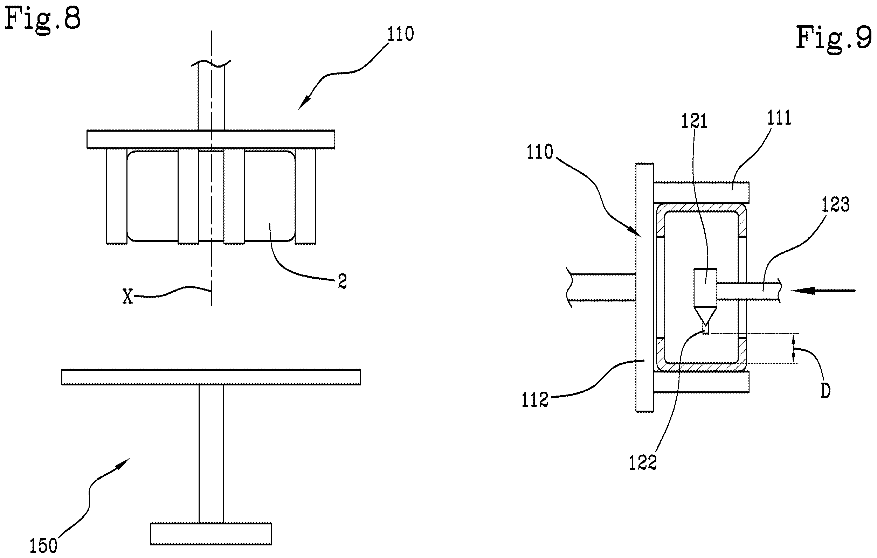

Subsequently, the anthropomorphic robotic arm 115a lifts the vulcanised tyre 2 (figure 8) and arranges it with horizontal rotation axis "X" in front of the scanning and dispensing unit 120 (figure 7).

The anthropomorphic robotic arm 115a further moves the grip device 110 so as to allow insertion of the dispensing nozzle 122 through the access area of the vulcanised tyre 2 left free by the grip device 110 itself until it is in the situation schematically illustrated in figure 9. The same situation is also achieved by the plant in figure 3.

Subsequently, it is provided to execute an action b) which provides for the preliminary scanning of the deposition portion of the internal surface 2a of the vulcanised tyre 2. For example, this action b) comprises detecting, at a plurality of points of the internal surface 2a, respective distances of the internal surface with respect to the scanning head or to the rotation axis of the vulcanised tyre taken as reference.

The control unit 140 drives and controls the relative movements between the scanning head 121 and the vulcanised tyre 2 to scan it. Preferably, the control unit 140 is operatively connected to the rotational actuator 117 and the translational actuator 118 or to the anthropomorphic robotic arm 115a so that the scanning head 121 follows a relative spiral trajectory with respect to the internal surface 2a of the vulcanised tyre 2 during the scan.

In particular, the following sub-actions are provided to execute the preliminary scan:
b1) positioning the scanning head 121 at a starting position,
b2) activating the scanning head 121,
b3) generating a relative scan motion between the scanning head 121 and the vulcanised tyre 2, starting from the starting position of the deposition portion of the vulcanised tyre 2 and concurrently with the activation of the scanning head 121. Preferably, the relative scanning motion coincides with the relative deposition motion and is composed of the same relative speeds (relative angular speed "R" and relative axial translation speed "T"). The relative scanning motion is preferably managed by the control unit 140 in a manner similar to the relative deposition motion.

Figure 10 shows the vulcanised tyre 2 integral with the grip device 110 and rotated about its rotation axis "X" with angular speed equal to the relative angular speed to execute the sub-action b3). Figure 12 illustrates the vulcanised tyre 2 integral with the grip device 110 and made to translate parallel to the rotation axis "X" with axial translation speed equal to the relative axial translation speed to execute the sub-action b3).

The control unit 140 is operatively connected to the scanning head 121 and is configured to generate, according to an action c), a mathematical model of at least the deposition portion on the basis of the preliminary scan executed by the scanning head 121. The mathematical model can be a digital model or a 3D image of the internal surface 2a. In other words, the control unit 140 processes the data detected by the scanning head 121, for example the distances of the deposition portion with respect to a reference, to generate a mathematical model of the real profile of the deposition portion. Because of the unavoidable machining tolerances, this real profile exhibits variations with respect to a theoretical axisymmetric profile with respect to the rotation axis "X".

If it is provided to detect, at a plurality of points of the internal surface 2a, respective distances of the internal surface itself with respect to a reference, action c) comprises storing said distances.

After having made the mathematical model from the deposition portion, according to an action d), the deposition process at least of the layer 13 of the additional component 12 is executed directly on the deposition portion.

For this purpose the following sub-actions are provided:
d1) positioning the dispensing nozzle 122 at a starting position and at a relative distance from the deposition portion,
d2) activating a continuous dispensing of the continuous elongated element "E" through the dispensing nozzle 122, for example by operating the dispensing device 130,
d3) generating the relative deposition motion between the dispensing nozzle 122 and the vulcanised tyre 2, starting from the starting position and simultaneously with the continuous dispensing, following a trajectory according to the mathematical model adapted to make a spiral deposition of the continuous elongated element "E" on the deposition portion up to the building of said layer 13. In the aforesaid relative deposition motion, the vulcanised tyre 2 is integral with the grip device 110. The control unit 140 is configured to generate this relative deposition motion between the dispensing nozzle 122 and the vulcanised tyre 2 following the aforementioned trajectory according to the mathematical model. Figure 11 shows the vulcanised tyre 2 integral with the grip device 110 and rotated about its rotation axis "X" with angular speed equal to the relative angular speed to execute the sub-action d3). Figure 12 illustrates the vulcanised tyre 2 integral with the grip device 110 and subjected to translation along the rotation axis "X" with axial translation speed equal to the relative axial translation speed to execute the sub-action d3). Alternatively, the dispensing nozzle 122 can translate with respect to the vulcanised tyre 2.

According to an action e), the deposition process of layer 13 is controlled by means of the adjusting of at least one deposition parameter as a function of the mathematical model of the deposition portion. The control unit 140 is configured to execute this control. For this purpose, the control unit 140 is operatively connected to one or more of: the rotational actuator 117, the translational actuator 118, the adjusting member 119, the tilting device 124, the anthropomorphic robotic arm 115a, the dispensing device 130.

A first possible deposition parameter is represented by the relative distance "D" between the dispensing nozzle 122 and the deposition portion. This relative distance is adjusted, preferably kept constant, by modifying the radial position of the dispensing nozzle 122 with respect to the deposition portion according to the mathematical model of the deposition portion.

For this purpose, the control unit 140 is operatively associated with the adjusting member 119. The control unit 140 controls the adjusting member 119 and/or its functions performed by the anthropomorphic robotic arm 115a by modifying the radial position of the dispensing nozzle 122.

A second possible deposition parameter is represented by the orientation of the continuous elongated element "E" with respect to the area of the deposition portion in which the continuous elongated element "E" is dispensed. This orientation is adjusted by modifying the tilt of the dispensing nozzle 122 with respect to the deposition portion, for example for the purpose of maintaining the continuous elongated element "E" perpendicular to the aforesaid area of the deposition portion.

For this purpose, the control unit 140 is operatively associated with the tilting device 124. The control unit 140 controls the tilting device 124 and/or its functions executed by the anthropomorphic robotic arm 115a by modifying the tilt of the dispensing nozzle 122.

A third possible deposition parameter is represented by the flow rate of the continuous elongated element "E". For this purpose, the control unit 140 is operatively associated with the modulatable dispensing device 130 and controls it to adjust the flow rate of the continuous elongated element "E".

A fourth possible deposition parameter is represented by a relative deposition motion speed, for example the relative angular speed "R" and/or the axial translational velocity "T". For this purpose, the control unit 140 is operatively connected and controls the modulatable actuator "A", for example the rotational actuator 117 and/or the translational actuator 118 or the anthropomorphic robotic arm 115a.

For example, the control unit 140 is operatively connected to the rotational actuator 117 to adjust the angular speed of the vulcanised tyre 2 according to the mathematical model of the deposition portion itself. In this case, therefore, the angular speed of the vulcanised tyre 2 is one of the possible deposition parameters regulated by the control unit 140. The control unit 140 intervenes, for example, on the rotational actuator 117 by modifying the angular speed of the vulcanised tyre 2, preferably for extending or shortening locally the continuous elongated element "E".

For example, the control unit 140 is operatively connected to the translational actuator 118 and intervenes on it to adjust the axial translation speed "T" of the vulcanised tyre 2 (and/or the dispensing nozzle 122) as a function of the mathematical model of the deposition portion itself. In this case, therefore, the axial translation speed "T" is one of the possible deposition parameters regulated by the control unit 140.

During the deposition process of the layer 13, then concurrently with the action e), the scanning head 121 can perform a control scan of areas of the deposition portion arranged immediately downstream of the dispensing nozzle 122 with reference to the relative deposition motion. The preliminary scan and the control scan can be carried out in similar ways, for example by detecting, at a plurality of points of the internal surface, respective distances of the internal surface with respect to a reference.

In this case, the control unit 140, appropriately configured, compares the preliminary scan and the control scan zone by zone and generates the relative deposition motion so that zone by zone the dispensing nozzle 122 follows the trajectory according to the mathematical model. In this way, the deposition process is controlled according to the mathematical model and the comparison between the preliminary scan and the control scan.

In other words, the control unit 140 verifies that the dispensing nozzle 122 follows the trajectory according to the mathematical model and intervenes for example on the actuator "A" to correct any deviations from the trajectory according to the mathematical model.

The vulcanised tyre 2 remains associated with the same gripping device 110 during the actions a) to e) to which it is subjected. According to the example shown in figures 3 or 7, a grip device 110 is supported and moved by the same support member 115, in particular by means of the same anthropomorphic robotic arm 115a, in all the actions a) to e).

If the additional component 12 consists of the layer 13 (tyre in figure 1), at the end of the deposition process the tyre 1 is obtained which can be transferred to the stabilisation station 170 to be subjected to a thermal stabilisation treatment.

If the additional component 12 comprises further elements and/or layers in addition to the layer 13 (tyre in figure 2), it is provided to complete the building of the additional component 12 preferably in the completion station 160. According to a first example in which the additional component 12 is a self-sealing complex or noise reducer complex and the layer 13 is respectively a layer of self-sealing or noise reducing material, the completion of the additional component 12 may provide for associating the layer 13 with further elements and/or layers. According to a second example in which the additional component 12 is a noise reducer complex and in which the layer 13 is a layer of adhesive material, the completion of the additional component 12 may provide for associating the noise reducing elements 14 and/or further layers to the layer 13.

After completion of the additional component 12, the tyre 1 is obtained which can be transferred to the stabilisation station 170 to be subjected to a thermal stabilisation treatment.

The process for packaging an additional component in the case of a production of batches of vulcanised tyres 2 takes place in a similar manner as described above and may have the following features. The vulcanised tyres of each batch have the same technical specifications, for example the same geometric features such as diameter, width, aspect ratio.

According to these technical specifications of the batch of vulcanised tyres being processed, a mathematical reference model can be prepared, for example stored in the control unit 140 and/or generated by the control unit 140 itself. For example, it is provided to subject a first vulcanised tyre of the batch to the actions from a) to e), obtaining a first mathematical model. This first mathematical model can then be stored as a reference mathematical model and subsequently, for each vulcanised tyre 2 in the batch, the control unit 140, appropriately configured, compares the relative mathematical model obtained as a result of the action c) with the reference mathematical model, before executing the deposition process of layer 13 according to actions d) and e). Depending on the result of this comparison, the control unit 140 enables or disables the deposition process of layer 13.

For example, the control unit 140 enables the deposition process of the layer 13 according to the actions d) and e) if the mathematical model obtained as a result of the action c) differs from the reference mathematical model for values within acceptable limits of tolerance. In particular, the control unit 140 enables the deposition process of the layer 13 according to the actions d) and e) if the distances of the internal surface 2a of the tyre with respect to a reference differ from the respective distances of the reference mathematical model for values within acceptable tolerance limits. For example, the control unit 140 enables the deposition process of the layer 13 according to the actions d) and e) if the profile of the deposition portion obtained by the mathematical model obtained as a result of the action c) does not deviate excessively from the profile of the deposition portion resulting from the reference mathematical model.

In addition or alternatively to the comparison with a reference mathematical model, it is possible to check the pattern of the mathematical models of the vulcanised tyres of the same batch comparing them from time to time with those already subjected to the actions from a) to e).

In the case in which there is an increasing deviation, it is likely that this deviation is due to the actuation of the grip device 110 and in particular to the actuation device 116.

In fact, by grasping the vulcanised tyre 2 from the outside so as to make it integral with it, the grip device 110 influences the profile of the internal surface 2a and in particular of the deposition portion. In other words, in addition to the possible non-uniformities due to the vulcanised tyre 2, the mathematical model of the deposition portion and in particular its profile is also influenced by the gripping device 110 which, in the case of the jaws 111, deforms the deposition portion in a sinusoidal manner. In addition to the above, the control unit 140 can therefore be operatively associated with the actuating device 116 and control it for making an adjustment, if the actuation of the grip device 110 is subject to hysteresis, as will be described below.

In fact, if the actuation of the grip device 110 is subject to hysteresis, the mathematical model of the deposition portion varies from one vulcanised tyre to the subsequent one progressively moving away from the initially obtained mathematical models up to requiring adjustment and/or maintenance intervention of the grip device itself.

The process of building the additional component 12 can therefore provide for subjecting at least two vulcanised tyres of the batch to actions a) to e) and subsequently subjecting a further vulcanised tyre of the batch to actions a) to c) to generate the mathematical model of the deposition portion of this further vulcanised tyre.

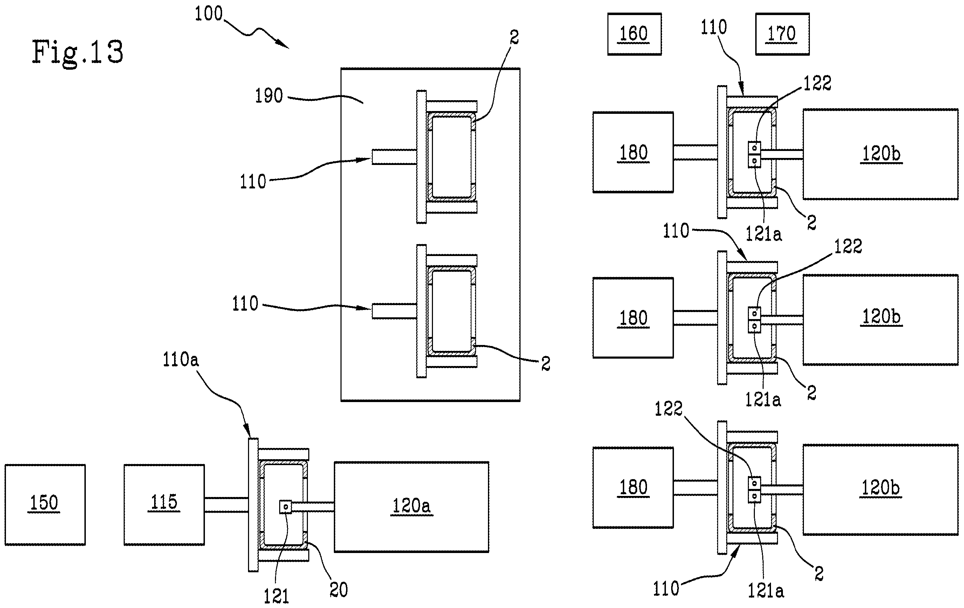

Preferably, before executing the actions d) and e) on this further vulcanised tyre, the control unit 140 compares the mathematical model of the further vulcanised tyre with the mathematical models of the deposition portions of the vulcanised tyres already subjected to the actions d) and e) and assigns a comparison value to each comparison to obtain a sequence of comparison values. The control unit 140 then generates a feedback signal when the sequence of comparison values tends to go out of a set of acceptable comparison values. This feedback signal activates a setting of the grip device 110 used in the action a) and/or sends a maintenance request to the grip device 110 used in action a). With reference to figure 13, a possible embodiment of the plant 100 is shown comprising a first support member 115, preferably a first anthropomorphic robotic arm, and a second support member 180, preferably a second anthropomorphic robotic arm. The system 100 further comprises a plurality of grip devices 110 selectively associable both to the first support member 115 and to the second support member 180.

The plant 100 further comprises at least one scanning unit 120a comprising the scanning head 121 configured for performing the preliminary scan and at least one dispensing unit 120b comprising the dispensing nozzle 122. The scanning unit 120a and the dispensing unit 120b are separated from each other so as to operate on separate vulcanised tyres 2 associated with distinct grip devices 110.

The scanning unit 120a has a first cycle time T1 which corresponds to the time necessary to execute the sequence of actions a) to c). The dispensing unit 120b has a second cycle time T2 which corresponds to the time necessary to execute the sequence of actions d) and e).

In use, each gripping device 110 is supported and moved by the first support member 115, preferably by the first anthropomorphic robotic arm, in actions a) to c) performed as described above. Subsequently, each grip device 110 is supported and moved by the second support member 180, preferably by the second anthropomorphic robotic arm, in actions d) and e) performed as described above.

With reference to figure 13, one of the grip devices has been indicated with reference 110a and one of the vulcanised tyres, referred to as further vulcanised tyres, has been indicated with reference 20. In action a), the grip device 110 supported and moved by the first support member 115 grasps a vulcanised tyre 2. This vulcanised tyre 2 is subjected to the actions a) to c) in association with a grip device 110 supported and moved by the first support member 115. Subsequently, the grip device 110 is released from the first support member 115 and, remaining associated to the same vulcanised tyre 2, is taken into management by the second support member 180 which supports and moves it to subject the respective vulcanised tyre 2 to actions d) and e). Simultaneously with these actions d) and e) executed on the vulcanised tyre 2, the further vulcanised tyre 20 is subjected to the actions a) to c) in association with the grip device 110a supported and moved by the first support member 115.

In the case where the second cycle time T2 is equal to the first cycle time T1, the plant 100 preferably comprises a plurality of dispensing units 120b for each scanning unit 120a. In particular, the plant 100 comprises for each scanning unit 120a a number of dispensing units 120b equal to the integer immediately higher than n.

In the example illustrated in figure 13, the scanning unit 120a has a first cycle time equal to t_{c} and each dispensing unit 120b has a second cycle time comprised between 2 and 3 times t_{c}, for example equal to 2.75 t_{c}, i.e. equal to 2.75 times the first cycle time, whereby the plant 100 comprises three dispensing units 120b for each scanning unit 120a.

With reference to the example described above relating to figure 13, it is therefore provided to subject to the actions d) and e) a plurality of vulcanised tyres 2 previously subjected to the actions a) to c), preferably in a number equal to the integer immediately higher than n, while the further vulcanised tyre 20 is subjected to actions a) to c).

Reference numeral 190 indicates a waiting station configured to receive the grip devices 110 associated with the respective vulcanised tyre 2 already subjected to actions a) to c) and awaiting to be subjected to actions d) and e). In other words, the waiting station 190 is configured to receive the grip devices 110 associated with the respective vulcanised tyre 2 in transit from the scanning 120a unit to one of the dispensing units 120b. According to what is illustrated in figure 13, preferably each dispensing unit 120b comprises a further scanning head 121a arranged immediately downstream of the dispensing nozzle 122 with respect to the relative deposition motion and configured to execute the control scan. The further scanning head 121a can be made as the scanning head 121 and for example comprises an emitter of electromagnetic waves, preferably of the laser type, or a probe or a camera or other apparatus suitable for the purpose. Preferably, each scanning head 121a is configured to detect, at a plurality of points of the deposition portion of the internal surface 2a of the vulcanised tyre 2, respective distances of the internal surface with respect to a reference, for example consisting of the scanning head itself or from the rotation axis "X" of the vulcanised tyre 2.

## Claims

1. Process for building an additional component (12) within a vulcanised tyre (2) comprising:
a) arranging a vulcanised tyre (2) having an external surface (2b) and an internal surface (2a) arranged around a rotation axis (X) of the vulcanised tyre itself and grasping said vulcanised tyre by means of a grip device (110),
b) executing a preliminary scan of at least one deposition portion of the internal surface (2a) of said vulcanised tyre (2),
c) generating a mathematical model of said at least one deposition portion on the basis of said preliminary scan,
d) executing a deposition process for depositing at least one layer (13) of said additional component (12) directly on said at least one deposition portion, wherein said deposition process comprises:
d1) positioning, at a starting position and at a relative distance from said at least one deposition portion, a dispensing nozzle (122) configured for dispensing a continuous elongated element (E),
d2) activating a continuous dispensing of the continuous elongated element (E) through said dispensing nozzle (122),
d3) generating a relative deposition motion between said dispensing nozzle (122) and said vulcanised tyre (2), starting from said starting position and simultaneously with said continuous dispensing, following a trajectory according to said mathematical model adapted to make a spiral deposition of the continuous elongated element (E) on said at least one deposition portion up to the building of said layer (13),
e) controlling said deposition process by means of the adjusting of at least one deposition parameter as a function of the mathematical model of said at least one deposition portion.

2. Process according to claim 1, wherein said deposition parameter is a relative distance (D) between the dispensing nozzle (122) and said at least one deposition portion and adjusting said relative distance (D) comprises modifying the radial position of the dispensing nozzle (122) with respect to said at least one deposition portion as a function of the mathematical model of said at least one deposition portion and wherein adjusting said relative distance (D) comprises modifying the radial position of the dispensing nozzle (122) with respect to said at least one deposition portion in order to maintain constant said relative distance (D).

3. Process according to claim 1, wherein said deposition parameter is an orientation (β) of the continuous elongated element (E) with respect to said at least one deposition portion and adjusting said orientation of the continuous elongated element (E) comprises modifying the tilt of the dispensing nozzle (122) with respect to said at least one deposition portion in order to adjust said orientation (β) as a function of the mathematical model of said at least one deposition portion and wherein adjusting said orientation (β) of the continuous elongated element (E) comprises modifying the tilt of the dispensing nozzle (122) with respect to said at least one deposition portion in order to maintain said continuous elongated element (E) perpendicular to said at least one deposition portion.

4. Process according to claim 1, wherein said deposition parameter is a flow rate of the continuous elongated element and adjusting said flow rate of the continuous elongated element comprises driving a dispensing device (130) of modulatable type operatively associated with the dispensing nozzle (122) as a function of the mathematical model of said at least one deposition portion.

5. Process according to claim 1, wherein said deposition parameter is a speed of said relative deposition motion and adjusting said speed comprises driving an actuator (A) of modulatable type operatively associated with said dispensing nozzle (122) and/or with said vulcanised tyre (2) in order to adjust said speed.

6. Process according to claim 1, comprising, during said deposition process:
- executing a control scan of zones of said at least one deposition portion arranged immediately downstream of said dispensing nozzle (122) with reference to said relative deposition motion,
- comparing zone by zone said preliminary scan and said control scan,
- generating said relative deposition motion in a manner such that, zone by zone, said dispensing nozzle (122) follows said trajectory according to said mathematical model.

7. Process according to claim 1, comprising:
arranging a mathematical reference model as a function of the specifications of a batch of vulcanised tyres being processed,
comparing the mathematical model of a vulcanised tyre (2) of said batch and said mathematical reference model before executing said deposition process,
enabling or disabling said deposition process as a function of said comparison between said mathematical model and said mathematical reference model.

8. Process according to claim 1, comprising:
- arranging a batch of vulcanised tyres being processed,
- subjecting, to actions a) to e), a group of at least two vulcanised tyres of said batch,
- subjecting a further vulcanised tyre of said batch to actions a) to c) in order to generate the mathematical model of said at least one deposition portion of said further vulcanised tyre,
- before executing actions d) and e) for said further vulcanised tyre, comparing the respective mathematical model with the mathematical models of the deposition portions of said vulcanised tyres of said group previously subjected to actions d) and e) and attributing a comparison value to each comparison in order to obtain a sequence of comparison values,
- generating a feedback signal when said sequence of comparison values tends to exit from a set of acceptable comparison values, said feedback signal being configured for activating at least one from among:
adjusting a grip device (110) used in action a),
maintaining a grip device (110) used in action a).

9. Plant (100) for building an additional component (12) within a vulcanised tyre (2) comprising:
a grip device (110) configured for grasping a vulcanised tyre (2) having an external surface (2b) and an internal surface (2a) arranged around a rotation axis (X) of the vulcanised tyre itself,
a scanning head (121) configured for executing a preliminary scan of at least one deposition portion of the internal surface (2a) of the vulcanised tyre (2),
a dispensing nozzle (122) configured for dispensing a continuous elongated element (E) of material adapted to make at least one layer (13) of said additional component (12),
an actuator (A) operatively associated with said dispensing nozzle (122) and/or with said vulcanised tyre (2) in order to generate a relative deposition motion between said dispensing nozzle (122) and said vulcanised tyre (2) in order to execute a deposition process of said layer (13) directly on said at least one deposition portion,
a control unit (140) configured for:
- generating a mathematical model of said at least one deposition portion on the basis of said preliminary scan,
- controlling said deposition process by means of the adjusting of at least one deposition parameter as a function of the mathematical model of the deposition portion.

10. Plant according to claim 9, wherein said grip device (110) is configured for coming into contact with the external surface (2b) of the vulcanised tyre (2) and for grasping the vulcanised tyre (2) from the outside, making it integral therewith in the relative deposition motion between said dispensing nozzle (122) and said vulcanised tyre (2).

11. Plant according to claim 9, comprising a dispensing device (130) of modulatable type operatively associated with the dispensing nozzle (122) and wherein said control unit (140) is operatively connected to said dispensing device (122) and configured for driving said dispensing device (122) as a function of the mathematical model of said at least one deposition portion.

12. Plant as claimed in claim 9, comprising:
a scanning unit (120a) comprising said scanning head (121) and
a dispensing unit (120b) comprising said dispensing nozzle (122),
said scanning unit (120a) and said dispensing unit (129b) being separated from each other.

13. Plant according to claim 12, wherein said dispensing unit (120b) comprises a further scanning head (121a) arranged immediately downstream of said dispensing nozzle (122) with respect to said relative deposition motion and configured for executing a control scan of zones of said at least one deposition portion.

14. Plant according to claim 9, comprising a scanning and dispensing unit (120) comprising said scanning head (121) and said dispensing nozzle (122).

15. Plant according to claim 14, wherein said scanning head (121) is arranged immediately downstream of said dispensing nozzle (122) with respect to said relative deposition motion and is further configured for executing a control scan of zones of said at least one deposition portion.

## Patentansprüche

1. Verfahren zur Fertigung einer zusätzlichen Komponente (12) innerhalb eines vulkanisierten Reifens (2), umfassend:
a) Anordnen eines vulkanisierten Reifens (2), der eine äußere Oberfläche (2b) und eine innere Oberfläche (2a) aufweist, die um eine Drehachse (X) des vulkanisierten Reifens selbst angeordnet ist, und Ergreifen des vulkanisierten Reifens mittels einer Greifeinrichtung (110),
b) Ausführen einer vorläufigen Abtastung zumindest eines Ablageabschnitts der inneren Oberfläche (2a) des vulkanisierten Reifens (2),
c) Erzeugen eines mathematischen Modells des zumindest einen Ablageabschnitts auf Grundlage der vorläufigen Abtastung,
d) Ausführen eines Ablegeverfahrens zum Ablegen zumindest einer Lage (13) der zusätzlichen Komponente (12) direkt auf dem zumindest einen Ablageabschnitt, wobei das Ablegeverfahren umfasst:
d1) Positionieren einer Ausgabedüse (122), die zur Ausgabe eines durchgehenden länglichen Elements (E) ausgestaltet ist, an einer Startposition und in einem relativen Abstand von dem zumindest einen Ablageabschnitt,
d2) Aktivieren einer durchgehenden Ausgabe des durchgehenden länglichen Elements (E) durch die Ausgabedüse (122),
d3) Erzeugen einer relativen Ablegebewegung zwischen der Ausgabedüse (122) und dem vulkanisierten Reifen (2), beginnend an der Startposition und gleichzeitig mit der durchgehenden Ausgabe einer Bahn in Übereinstimmung mit dem mathematischen Modell folgend, das dazu geeignet ist, eine spiralförmige Ablage des durchgehenden länglichen Elements (E) an dem zumindest einen Ablageabschnitt zu tätigen, bis zum Aufbau der Lage (13),
e) Steuern des Ablegeverfahrens mittels der Einstellung von zumindest einem Ablegeparameter als eine Funktion des mathematischen Modells des zumindest einen Ablageabschnitts.

2. Verfahren nach Anspruch 1, wobei der Ablegeparameter ein relativer Abstand (D) zwischen der Ausgabedüse (122) und dem zumindest einen Ablageabschnitt ist, und das Einstellen des relativen Abstands (D) das Modifizieren der radialen Position der Ausgabedüse (122) in Bezug auf den zumindest einen Ablageabschnitt als eine Funktion des mathematischen Modells des zumindest einen Ablageabschnitts umfasst, und wobei das Einstellen des relativen Abstands (D) das Modifizieren der radialen Position der Ausgabedüse (122) in Bezug auf den zumindest einen Ablageabschnitt umfasst, um den relativen Abstand (D) konstant zu halten.

3. Verfahren nach Anspruch 1, wobei der Ablegeparameter eine Orientierung (B) des durchgehenden länglichen Elements (E) in Bezug auf den zumindest einen Ablageabschnitt ist, und das Einstellen der Orientierung des durchgehenden länglichen Elements (E) das Modifizieren der Neigung der Ausgabedüse (122) in Bezug auf den zumindest einen Ablageabschnitt umfasst, um die Orientierung (B) als eine Funktion des mathematischen Modells des zumindest einen Ablageabschnitts einzustellen, und wobei das Einstellen der Orientierung (B) des durchgehenden länglichen Elements (E) das Modifizieren der Neigung der Ausgabedüse (122) in Bezug auf den zumindest einen Ablageabschnitt umfasst, um das durchgehende längliche Element (E) senkrecht auf den zumindest einen Ablageabschnitt zu halten.

4. Verfahren nach Anspruch 1, wobei der Ablegeparameter eine Flussrate des durchgehenden länglichen Elements ist und das Einstellen der Flussrate des durchgehenden länglichen Elements das Antreiben einer Ausgabevorrichtung (130) eines modulierbaren Typs, die der Ausgabedüse (122) zugeordnet ist, als eine Funktion des mathematischen Modells des zumindest einen Ablageabschnitts umfasst.

5. Verfahren nach Anspruch 1, wobei der Ablegeparameter eine Geschwindigkeit der relativen Ablegebewegung ist und das Einstellen der Geschwindigkeit das Antreiben eines Stellglieds (A) eines modulierbaren Typs, das der Ausgabedüse (122) und/oder dem vulkanisierten Reifen (2) zugeordnet ist, umfasst, um die Geschwindigkeit einzustellen.

6. Verfahren nach Anspruch 1, das während des Ablegeverfahrens ferner umfasst:
- Ausführen einer Kontrollabtastung von Zonen des zumindest einen Ablageabschnitts, die in Bezug auf die relative Ablegebewegung unmittelbar stromabwärts der Ausgabedüse (122) angeordnet sind,
- Vergleichen der vorläufigen Abtastung und der Kontrollabtastung Zone für Zone,
- Erzeugen der relativen Ablegebewegung auf solche Weise, dass die Ausgabedüse (122) in Übereinstimmung mit dem mathematischen Modell Zone für Zone der Bahn folgt.

7. Verfahren nach Anspruch 1, umfassend:
Anordnen eines mathematischen Referenzmodells als eine Funktion der Spezifikationen einer Charge von vulkanisierten Reifen, die verarbeitet werden,
Vergleichen des mathematischen Modells eines vulkanisierten Reifens (2) der Charge und des mathematischen Referenzmodells vor dem Ausführen des Ablegeverfahrens,
Aktivieren oder Deaktivieren des Ablegeverfahrens als eine Funktion des Vergleichs zwischen dem mathematischen Modell und dem mathematischen Referenzmodell.

8. Verfahren nach Anspruch 1, umfassend:
- Anordnen einer Charge von vulkanisierten Reifen, die verarbeitet werden,
- Unterziehen einer Gruppe von zumindest zwei vulkanisierten Reifen der Charge den Vorgängen a) bis e),
- Unterziehen eines weiteren vulkanisierten Reifens der Charge den Vorgängen a) bis c), um das mathematische Modell des zumindest einen Ablageabschnitts des weiteren vulkanisierten Reifens zu erzeugen,
- vor dem Ausführen der Vorgänge d) und e) für den weiteren vulkanisierten Reifen, Vergleichen des jeweiligen mathematischen Modells mit den mathematischen Modellen der Ablageabschnitte der vulkanisierten Reifen der Gruppe, die vorher den Vorgängen d) und e) unterzogen wurden, und Zuordnen eines Vergleichswerts zu jedem Vergleich, um eine Sequenz von Vergleichswerten zu erhalten,
- Erzeugen eines Rückkopplungssignals, wenn die Sequenz von Vergleichswerten dazu neigt, von einer Menge akzeptabler Vergleichswerte abzuweichen, wobei das Rückkopplungssignal dazu ausgestaltet ist, zumindest eines aus Folgendem zu aktivieren:
Einstellen einer Greifeinrichtung (110), die in Vorgang a) verwendet wird,
Halten einer Greifeinrichtung (110), die in Vorgang a) verwendet wird.

9. Anlage (100) zur Fertigung einer zusätzlichen Komponente (12) innerhalb eines vulkanisierten Reifens (2), umfassend:
eine Greifeinrichtung (110), die dazu ausgestaltet ist, einen vulkanisierten Reifen (2) zu ergreifen, der eine äußere Oberfläche (2b) und eine innere Oberfläche (2a) aufweist, die um eine Drehachse (X) des vulkanisierten Reifens selbst angeordnet ist,
einen Abtastkopf (121), der dazu ausgestaltet ist, eine vorläufige Abtastung von zumindest einem Ablageabschnitt der inneren Oberfläche (2a) des vulkanisierten Reifens (2) auszuführen,
eine Ausgabedüse (122), die dazu ausgestaltet ist, ein durchgehendes längliches Element (E) aus einem Material, das dazu geeignet ist, zumindest eine Lage (13) der zusätzlichen Komponente (12) herzustellen, auszugeben,
ein Stellglied (A), das wirkmäßig der Ausgabedüse (122) und/oder dem vulkanisierten Reifen (2) zugeordnet ist, um eine relative Ablegebewegung zwischen der Ausgabedüse (122) und dem vulkanisierten Reifen (2) zu erzeugen, um ein Verfahren zum Ablegen der Lage (13) direkt auf dem zumindest einen Ablageabschnitt auszuführen,
eine Steuereinheit (140), die dazu ausgestaltet ist:
- ein mathematisches Modell des zumindest einen Ablageabschnitts auf Grundlage der vorläufigen Abtastung zu erzeugen,
- das Ablegeverfahren mittels der Einstellung von zumindest einem Ablegeparameter als eine Funktion des mathematischen Modells des zumindest einen Ablageabschnitts zu steuern.

10. Anlage nach Anspruch 9, wobei die Greifeinrichtung (110) dazu ausgestaltet ist, in Kontakt mit der äußeren Oberfläche (2b) des vulkanisierten Reifens (2) zu gelangen und den vulkanisierten Reifen (2) von außen zu ergreifen, und diesen damit in der relativen Ablegebewegung zwischen der Ausgabedüse (122) und dem vulkanisierten Reifen (2) einteilig zu machen.

11. Anlage nach Anspruch 9, umfassend eine Ausgabevorrichtung (130) eines modulierbaren Typs, die der Ausgabedüse (122) zugeordnet ist, wobei die Steuereinheit (140) mit der Ausgabevorrichtung (122) wirkverbunden und dazu ausgestaltet ist, die Ausgabevorrichtung (122) als eine Funktion des mathematischen Modells des zumindest einen Ablageabschnitts anzutreiben.

12. Anlage nach Anspruch 9, umfassend:
eine Abtasteinheit (120a) umfassend den Abtastkopf (121) und
eine Ausgabeeinheit (120b) umfassend die Ausgabedüse (122),
wobei die Abtasteinheit (120a) und die Ausgabeeinheit (129b) voneinander getrennt sind.

13. Anlage nach Anspruch 12, wobei die Ausgabeeinheit (120b) einen weiteren Abtastkopf (121a) umfasst, der in Bezug auf die relative Ablegebewegung der Ausgabedüse (122) unmittelbar nachgeschaltet angeordnet und dazu ausgestaltet ist, eine Kontrollabtastung von Zonen des zumindest einen Ablageabschnitts auszuführen.

14. Anlage nach Anspruch 9, umfassend eine Abtast- und Ausgabeeinheit (120), welche den Abtastkopf (121) und die Ausgabedüse (122) umfasst.

15. Anlage nach Anspruch 14, wobei der Abtastkopf (121) in Bezug auf die relative Ablegebewegung der Ausgabedüse (122) unmittelbar nachgeschaltet angeordnet und ferner dazu ausgestaltet ist, eine Kontrollabtastung von Zonen des zumindest einen Ablageabschnitts auszuführen.

## Revendications

1. Processus de construction d'un composant supplémentaire (12) dans un pneu vulcanisé (2) comprenant :
a) l'agencement d'un pneu vulcanisé (2) ayant une surface externe (2b) et une surface interne (2a) agencées autour d'un axe de rotation (X) du pneu vulcanisé lui-même et la saisie dudit pneu vulcanisé au moyen d'un dispositif de préhension (110),
b) l'exécution d'un balayage préliminaire d'au moins une partie de dépôt de la surface interne (2a) dudit pneu vulcanisé (2),
c) la génération d'un modèle mathématique de ladite au moins une partie de dépôt sur la base dudit balayage préliminaire,
d) l'exécution d'un processus de dépôt pour déposer au moins une couche (13) dudit composant supplémentaire (12) directement sur ladite au moins une partie de dépôt, où ledit processus de dépôt comprend :
d1) le positionnement, à une position de départ et à une distance relative de ladite au moins une partie de dépôt, d'une buse de distribution (122) configurée pour distribuer un élément allongé continu (E),
d2) l'activation d'une distribution continue de l'élément allongé continu (E) à travers ladite buse de distribution (122),
d3) la génération d'un mouvement de dépôt relatif entre ladite buse de distribution (122) et ledit pneu vulcanisé (2), en commençant à partir de ladite position de départ et simultanément avec ladite distribution continue, suivant une trajectoire selon ledit modèle mathématique adaptée pour réaliser un dépôt en spirale de l'élément allongé continu (E) sur ladite au moins une partie de dépôt jusqu'à la construction de ladite couche (13),
e) la commande dudit processus de dépôt au moyen du réglage d'au moins un paramètre de dépôt en fonction du modèle mathématique de ladite au moins une partie de dépôt.

2. Processus selon la revendication 1, dans lequel ledit paramètre de dépôt est une distance relative (D) entre la buse de distribution (122) et ladite au moins une partie de dépôt et le réglage de ladite distance relative (D) comprend la modification de la position radiale de la buse de distribution (122) par rapport à ladite au moins une partie de dépôt en fonction du modèle mathématique de ladite au moins une partie de dépôt et dans lequel le réglage de ladite distance relative (D) comprend la modification de la position radiale de la buse de distribution (122) par rapport à ladite au moins une partie de dépôt afin de maintenir constante ladite distance relative (D).

3. Processus selon la revendication 1, dans lequel ledit paramètre de dépôt est une orientation (β) de l'élément allongé continu (E) par rapport à ladite au moins une partie de dépôt et le réglage de ladite orientation de l'élément allongé continu (E) comprend la modification de l'inclinaison de la buse de distribution (122) par rapport à ladite au moins une partie de dépôt afin de régler ladite orientation (β) en fonction du modèle mathématique de ladite au moins une partie de dépôt et dans lequel le réglage de ladite orientation (β) de l'élément allongé continu (E) comprend la modification de l'inclinaison de la buse de distribution (122) par rapport à ladite au moins une partie de dépôt afin de maintenir ledit élément allongé continu (E) perpendiculaire à ladite au moins une partie de dépôt.

4. Processus selon la revendication 1, dans lequel ledit paramètre de dépôt est un débit de l'élément allongé continu et le réglage dudit débit de l'élément allongé continu comprend l'entraînement d'un dispositif de distribution (130) de type modulable associé de manière fonctionnelle à la buse de distribution (122) en fonction du modèle mathématique de ladite au moins une partie de dépôt.

5. Processus selon la revendication 1, dans lequel ledit paramètre de dépôt est une vitesse dudit mouvement de dépôt relatif et le réglage de ladite vitesse comprend l'entraînement d'un actionneur (A) de type modulable associé de manière fonctionnelle à ladite buse de distribution (122) et/ou audit pneu vulcanisé (2) afin de régler ladite vitesse.

6. Processus selon la revendication 1, comprenant, lors dudit processus de dépôt :
- l'exécution d'un balayage de commande de zones de ladite au moins une partie de dépôt agencées immédiatement en aval de ladite buse de distribution (122) en référence audit mouvement de dépôt relatif,
- la comparaison, zone par zone, dudit balayage préliminaire et dudit balayage de commande,
- la génération dudit mouvement de dépôt relatif de manière à ce que, zone par zone, ladite buse de distribution (122) suive ladite trajectoire selon ledit modèle mathématique.

7. Processus selon la revendication 1, comprenant :
l'agencement d'un modèle mathématique de référence en fonction des spécifications d'un lot de pneus vulcanisés en cours de traitement,
la comparaison du modèle mathématique d'un pneu vulcanisé (2) dudit lot et dudit modèle mathématique de référence avant d'exécuter ledit processus de dépôt,
l'activation ou la désactivation dudit processus de dépôt en fonction de ladite comparaison entre ledit modèle mathématique et ledit modèle mathématique de référence.

8. Processus selon la revendication 1, comprenant :
- l'agencement d'un lot de pneus vulcanisés en cours de traitement,
- la soumission, aux actions a) à e), d'un groupe d'au moins deux pneus vulcanisés dudit lot,
- la soumission, d'un autre pneu vulcanisé dudit lot aux actions a) à c) afin de générer le modèle mathématique de ladite au moins une partie de dépôt dudit autre pneu vulcanisé,
- avant d'exécuter les actions d) et e) pour ledit autre pneu vulcanisé, la comparaison du modèle mathématique respectif avec les modèles mathématiques des parties de dépôt desdits pneus vulcanisés dudit groupe préalablement soumis aux actions d) et e) et l'attribution d'une valeur de comparaison à chaque comparaison afin d'obtenir une séquence de valeurs de comparaison,
- la génération d'un signal de retour lorsque ladite séquence de valeurs de comparaison tend à sortir d'un ensemble de valeurs de comparaison acceptables, ledit signal de retour étant configuré pour activer au moins l'un parmi :
le réglage d'un dispositif de préhension (110) utilisé dans l'action a),
le maintien d'un dispositif de préhension (110) utilisé dans l'action a).

9. Installation (100) de construction d'un composant supplémentaire (12) dans un pneu vulcanisé (2) comprenant :
un dispositif de préhension (110) configuré pour saisir un pneu vulcanisé (2) ayant une surface externe (2b) et une surface interne (2a) agencées autour d'un axe de rotation (X) du pneu vulcanisé lui-même,
une tête de balayage (121) configurée pour exécuter un balayage préliminaire d'au moins une partie de dépôt de la surface interne (2a) du pneu vulcanisé (2),
une buse de distribution (122) configurée pour distribuer un élément allongé continu (E) d'un matériau adapté pour réaliser au moins une couche (13) dudit composant supplémentaire (12),
un actionneur (A) associé de manière fonctionnelle à ladite buse de distribution (122) et/ou audit pneu vulcanisé (2) afin de générer un mouvement de dépôt relatif entre ladite buse de distribution (122) et ledit pneu vulcanisé (2) afin d'exécuter un processus de dépôt de ladite couche (13) directement sur ladite au moins une partie de dépôt,
une unité de commande (140) configurée pour :
- générer un modèle mathématique de ladite au moins une partie de dépôt sur la base dudit balayage préliminaire,
- commander ledit processus de dépôt au moyen du réglage d'au moins un paramètre de dépôt en fonction du modèle mathématique de la partie de dépôt.

10. Installation selon la revendication 9, dans laquelle ledit dispositif de préhension (110) est configuré pour entrer en contact avec la surface externe (2b) du pneu vulcanisé (2) et pour saisir le pneu vulcanisé (2) depuis l'extérieur, le rendant solidaire de celui-ci dans le mouvement de dépôt relatif entre ladite buse de distribution (122) et ledit pneu vulcanisé (2).

11. Installation selon la revendication 9, comprenant un dispositif de distribution (130) de type modulable associé de manière fonctionnelle à la buse de distribution (122) et dans laquelle ladite unité de commande (140) est reliée de manière fonctionnelle audit dispositif de distribution (122) et configurée pour entraîner ledit dispositif de distribution (122) en fonction du modèle mathématique de ladite au moins une partie de dépôt.

12. Installation telle que revendiquée dans la revendication 9, comprenant :
une unité de balayage (120a) comprenant ladite tête de balayage (121) et une unité de distribution (120b) comprenant ladite buse de distribution (122),
ladite unité de balayage (120a) et ladite unité de distribution (129b) étant séparées l'une de l'autre.

13. Installation selon la revendication 12, dans laquelle ladite unité de distribution (120b) comprend une autre tête de balayage (121a) agencée immédiatement en aval de ladite buse de distribution (122) par rapport audit mouvement de dépôt relatif et configurée pour exécuter un balayage de commande de zones de ladite au moins une partie de dépôt.

14. Installation selon la revendication 9, comprenant une unité de balayage et de distribution (120) comprenant ladite tête de balayage (121) et ladite buse de distribution (122).

15. Installation selon la revendication 14, dans laquelle ladite tête de balayage (121) est agencée immédiatement en aval de ladite buse de distribution (122) par rapport audit mouvement de dépôt relatif et est en outre configurée pour exécuter un balayage de commande de zones de ladite au moins une partie de dépôt.
